# EUROPÄISCHE PATENTANMELDUNG

(11) **EP 4 227 623 A1**
(43) Veröffentlichungstag der Anmeldung: **16.08.2023**
(21) Anmeldenummer: 22156633.4
(22) Anmeldetag: 14.02.2022
(51) Int. Cl.: F26B 5/04, B65G 65/00, F26B 5/06, F26B 25/00

(54) **PILOTGEFRIERTROCKNER-CONTAINMENT UND VERFAHREN ZUM BELADEN UND/ODER ENTLADEN EINES PILOTGEFRIERTROCKNERS**

(71) Anmelder: Martin Christ Gefriertrocknungsanlagen GmbH, 37520 Osterode am Harz (DE)
(72) Erfinder: Harms, Dr. Frank, 37520 Osterode am Harz (DE); Wagner, Alexander, 35102 Lohra (DE); Battenberg, Ralf, 35102 Marburg (DE)
(74) Vertreter: REHBERG HÜPPE + PARTNER

(57) **Zusammenfassung**

Die Erfindung betrifft ein Pilotgefriertrockner-Containment (20), welches Verwendung findet für ein manuell gesteuertes Be- und/oder Entladen eines Pilotgefriertrockners (19). Das Pilotgefriertrockner-Containment (20) verfügt über eine Wandung (13), die einen Innenraum des Pilotgefriertrockner-Containments (20) begrenzt. An der Wandung (13) ist mindestens ein Handschuh gehalten. Der Handschuhinnenraum ist von außen für eine Hand eines Bedieners zugänglich und gegenüber dem Innenraum des Pilotgefriertrockner-Containments (20) abgedichtet.

Erfindungsgemäß ist in dem Innenraum des Pilotgefriertrockner-Containments (20) mindestens ein Handbetätigungsorgan (32), insbesondere ein Handrad, angeordnet. Eine manuelle Betätigung des Handbetätigungsorgans (32) führt zu einer Bewegung eines Förderorgans (insbesondere eines Schlittens (33), eines Beladeteils (34) und/oder eines Entladeteils (36)), wobei die Bewegung des Förderorgans durch eine Führung entlang eines durch die Führung vorgegebenen Freiheitsgrades geführt ist.

## Beschreibung

### TECHNISCHES GEBIET DER ERFINDUNG

Die Erfindung betrifft ein Pilotgefriertrockner-Containment, welches für das manuell gesteuerte Be- und/oder Entladen eines Pilotgefriertrockners Einsatz findet. Des Weiteren betrifft die Erfindung ein Verfahren zum Beladen und/oder Entladen eines Pilotgefriertrockners unter Einsatz eines Pilotgefriertrockner-Containments.

### DEFINITIONEN

In der vorliegenden Patentanmeldung bzw. dem vorliegenden Patent sind die folgenden Begriffe wie folgt definiert und auszulegen:
a) Ein "**Pilotgefriertrockner**" ist ein Gefriertrockner, welcher eine einzige, eine beliebige Anzahl oder sämtliche der folgenden Bedingungen erfüllt:
   - Pilotgefriertrockner umfassen sogenannte "Entwicklungsgefriertrockner", "Kleinseriengefriertrockner" oder "Laborgefriertrockner".
   - Der Pilotgefriertrockner wird nicht vollautomatisiert ohne manuelle Interaktion mittels beispielsweise elektrischen Antriebs- und Fördereinrichtungen be- und entladen. Vielmehr erfolgt bei einem Pilotgefriertrockner ein Beladen, indem ein Bediener manuell das Aufschieben der Trocknungsprodukte auf eine Stellfläche einer Trocknungskammer des Pilotgefriertrockners verursacht oder herbeiführt, und ein Entladen, indem der Bediener manuell das Herunterschieben der Trocknungsprodukte von der Stellfläche der Trocknungskammer des Pilotgefriertrockners verursacht oder herbeiführt.
   - Pilotgefriertrockner können über Stellflächen verfügen, deren größte Abmessung (insbesondere Breite, Länge und/oder Durchmesser) kleiner ist als 800 mm, kleiner ist als 700 mm, kleiner ist als 650 mm, kleiner ist als 600 mm oder sogar kleiner ist als 550 mm.
   - Pilotgefriertrockner können über eine Gesamt-Aufstandsfläche der Stellflächen verfügen, die kleiner ist als 5 m², kleiner ist als 4 m², kleiner ist als 3 m², kleiner ist als 2 m², kleiner ist als 1,5 m² oder sogar kleiner ist als 1 m².
   - In einem Pilotgefriertrockner kann eine manuelle und individuelle Vorgabe der Prozessbedingungen erfolgen, wobei für sukzessive Gefriertrocknungsprozesse unterschiedliche individuelle Prozessparameter verwendet werden.
   - Der Pilotgefriertrockner kann dazu dienen, Prozessparameter für einen Gefriertrocknungsprozess zu variieren und/oder zu optimieren, um dann die ermittelten Prozessparameter in einem anschließenden Serien-Gefriertrocknungsprozess in einer vollautomatisierten Gefriertrocknungsanlage zu verwenden.
   - In einem Pilotgefriertrockner kann die Gesamtmasse des Trocknungsguts in den Trocknungsprodukten einer Trocknungskammer während eines Gefriertrocknungsprozesses höchstens 50 kg, höchstens 20 kg, höchstens 16 kg, höchstens 12 kg, höchstens 10 kg, höchstens 8 kg, höchstens 6 kg oder sogar höchstens 4 kg betragen, wozu der Pilotgefriertrockner mit einer entsprechenden Aufnahmekapazität des Eiskondensators ausgestattet ist.
   - Die Zahl der Stellflächen des Pilotgefriertrockners kann auf maximal 10 Stellflächen, insbesondere maximal 8 Stellflächen, maximal 6 Stellflächen, maximal 5 Stellflächen, maximale 4 Stellflächen oder maximale 3 Stellflächen begrenzt sein. Im Extremfall kann der Pilotgefriertrockner auch lediglich ein einzige Stellfläche aufweisen.
   - Der Pilotgefriertrockner kann als freistehende feste oder mobile Einheit oder als Tischgerät ausgebildet sein oder zum Einbau in eine sterile Raumwand bestimmt sein. Der Pilotgefriertrockner kann mit dem Pilotgefriertrockner-Containment auch als eine Einheit ausgebildet sein.
   - Der Pilotgefriertrockner kann eine Bauhöhe aufweisen, die kleiner ist als 150 cm, kleiner ist als 120 cm oder kleiner ist als 100 cm.
   - Möglich ist, dass der Pilotgefriertrockner über Stellflächen verfügt, die nicht (insbesondere automatisiert) während des Be- und/oder Entladens in unterschiedliche Höhen (insbesondere jeweils in eine Höhe einer Be- und/oder Entladeplattform, die sich vor der Tür des Pilotgefriertrockners befindet) bringbar sind, sondern während es Beladens, des Gefriertrocknungsprozesses und des Entladens dieselbe Höhe aufweisen.
b) Ein "**Pilotgefriertrockner-Containment**" erfüllt eine, eine beliebige Anzahl oder sämtliche der folgenden Bedingungen:
   - Ein Pilotgefriertrockner-Containment gewährleistet ein gewünschtes Maß an Reinheit der Trocknungsprodukte und der Trocknungskammer bei dem Be- und Entladen des Pilotgefriertrockners und/oder vermeidet oder reduziert eine Kontamination der Trocknungsprodukte und der Trocknungskammer während des manuellen Be- und Entladens. Hier muss u. U. ein vorgeschriebenes Maß an Reinheit gewährleistet werden, eine Partikelgenerierung reduziert werden und/oder ein Keimrisiko vermieden werden.
   - Ein Pilotgefriertrockner-Containment kann auch als so genanntes "Restricted Access Barrier System" (abgekürzt RABS; in offener Ausführungsform "oRAPS" oder geschlossener Ausführung "cRAPS") ausgebildet sein. Hierbei kann das Pilotgefriertrockner-Containment eine Einhausung von aseptischen Prozessen und eine Barriere in Form eines cRABS-Gehäuses mit Handschuheingriffen zwischen dem Bediener und dem Produkt bereitstellen. Möglich ist, dass durch ein Laminar Air Flow System inkl. einer kontrollierten Überdruckregelung die Abdichtung und die Sicherheit für das Produkt gewährleistet werden. Das Ein- und Ausschleusen von Produkten und Material erfolgt über Mouse Holes oder geeignete Transfersysteme. Alle sicherheitsrelevanten Funktionen können permanent elektronisch überwacht werden.
   - Ein Pilotgefriertrockner-Containment bezeichnet einen einem Pilotgefriertrockner im Bereich seiner Tür vorgeordneten Raum oder eine entsprechend angeordnete Kammer (im Folgenden "Kammer").
   - Das Pilotgefriertrockner-Containment kann als Isolator-Kammer ausgebildet sein.
   - Die Kammer kann an eine eine Tür des Pilotgefriertrockners aufweisende Stirnseite des Pilotgefriertrockners angrenzen.
   - Die Kammer kann vollständig geschlossen sein oder nur teilweise geschlossen sein.
   - Möglich ist, dass an die Kammer ein Be- und/oder Entlüftungssystem angeschlossen ist, wobei das Be- und/oder Entlüftungssystem auch mit Filtereinrichtungen und/oder Sterilisationseinrichtungen ausgestattet sein kann.
   - Möglich ist, dass das Pilotgefriertrockner-Containment über mindestens eine Schleuse oder mindestens ein sogenanntes "Mouse-Hole" verfügt, über die (beispielsweise seitlich) ein Batch von Trocknungsprodukten über eine geeignete Zufördereinrichtung in das Pilotgefriertrockner-Containment einbringbar ist und/oder der Batch der Trocknungsprodukte aus dem Pilotgefriertrockner-Containment über eine geeignete Abfördereinrichtung abgefördert werden kann. Die Schleuse oder das Mouse-Hole stellt lediglich eine temporäre Öffnung des Pilotgefriertrockner-Containments bereit, die nur für das Zu- oder Abfördern geöffnet wird und ansonsten dicht geschlossen sein kann oder zumindest eine erhöhte Abdichtung gewährleistet.
   - Das Pilotgefriertrockner-Containment verfügt über eine beliebig geformte Wandung, die vorzugsweise der die Tür aufweisenden Stirnseite des Pilotgefriertrockners gegenüberliegt und die Kammer auf der dem Pilotgefriertrockner abgewandten Seite begrenzt. Ein Handschuh, der auch als Stulpenhandschuh oder "Safety-Glove" bezeichnet wird, oder zwei derartige Handschuhe, sind unter Abdichtung an der Wandung gehalten. Ein Bediener kann seine Hand (und auch zumindest den Ellbogen, ggf. auch mit dem Oberarm) in einen Handschuhinnenraum des Handschuhs einführen und dann in der von der Wandung begrenzten Kammer des Pilotgefriertrockner-Containments in Wechselwirkung mit den Trocknungsprodukten, dem Batch, der Tür des Pilotgefriertrockners und/oder Manipulationsorganen für das Be- und Entladen in Wechselwirkung treten.

### STAND DER TECHNIK

Dem Video auf der Internet-Seite
www.youtube.com/watch?v=Tdex3xbCZUA
(Datum der Einsichtnahme: 30.11.2021)
ist der Stand der Technik zum manuellen Be- und Entladen eines Pilotgefriertrockners unter Einsatz eines Pilotgefriertrockner-Containments zu entnehmen. Hier ist das Pilotgefriertrockner-Containment als in der Horizontalebene geschlossene Isolatorkammer ausgebildet, wobei die Isolatorkammer auf einer Seite durch die Stirnseite des Pilotgefriertrockners, in der die Tür des Pilotgefriertrockners angeordnet ist, und auf der gegenüberliegenden Seite durch eine Wandung geschlossen ist. Der Bediener kann über Handschuhe, die dicht an der Wandung gehalten sind, die für das Be- und Entladen erforderlichen Manipulationen einer Gruppe von Trocknungsprodukten, die einer Stellfläche zugeordnet sind (im Folgenden "Stellflächen-Trocknungsproduktgruppe"), vornehmen. Die Stellflächen-Trocknungsproduktgruppe ist zunächst in einem rechteckigen, allseits geschlossenen Rahmen angeordnet und seitlich geführt, der auf einem Tablar steht. Zunächst zieht der Bediener die Stellflächen-Trocknungsproduktgruppe mit einer hakenförmigen Manipulationsstange in eine zentrale Stellung auf einen Hubtisch vor der Tür des Pilotgefriertrockners, wobei die exakte Positionierung durch unmittelbares manuelles Verschieben des Tablars mit dem Rahmen und der Stellflächen-Trocknungsproduktgruppe ohne Einsatz der Manipulationsstange erfolgt. Hieran anschließend wird die Tür des Pilotgefriertrockners manuell geöffnet. Die Hände des Bedieners werden dann aus dem Innenraum des Pilotgefriertrockner-Containments und aus den Handschuhen entfernt, um einen Antrieb für den Hubtisch zu betätigen, mittels dessen das Tablar, der Rahmen und die Stellflächen-Trocknungsproduktgruppe auf die Höhe einer zu beladenen Stellfläche angehoben werden. Nach einem Wiedereinführen der Hände in die Handschuhe wird das Tablar mit dem Rahmen und der Stellflächen-Trocknungsproduktgruppe relativ zu dem Hubtisch manuell in Beladerichtung über einen ersten Teilbeladeweg bis zu der zu beladenden Stellfläche verschoben. Dann erfolgt eine Relativbewegung des Rahmens mit der Stellflächen-Trocknungsproduktgruppe gegenüber dem Tablar über einen zweiten Teilbeladeweg derart, dass der Rahmen mit der Stellflächen-Trocknungsproduktgruppe auf die Stellfläche aufgeschoben wird. Hierbei wird der Rahmen mit der Stellflächen-Trocknungsproduktgruppe zunächst direkt manuell verschoben. Um auch ein vollständiges Einschieben in die Trocknungskammer in größerer Entfernung von der Wandung zu ermöglichen, wird am Ende des zweiten Teilbeladeweges eine längere Manipulationsstange verwendet. Hieran anschließend wird das nun leere Tablar wieder vollständig auf den Hubtisch gezogen. Um die Tür des Pilotgefriertrockners schließen zu können, entnimmt der Bediener seine Hände aus den Handschuhen und betätigt manuell den Antrieb zum Absenken des Hubtisches. Nach Wiedereinführen der Hände in die Handschuhe kann ein Verschließen der Tür des Pilotgefriertrockners erfolgen und der Gefriertrocknungsprozess kann durchgeführt werden. Dem Video kann auch das Verfahren zum grundsätzlich entsprechenden, aber in umgekehrter Reihenfolge durchgeführten Entladen des Pilotgefriertrockners nach Beendigung des Gefriertrocknungsprozesses entnommen werden.

### AUFGABE DER ERFINDUNG

Der Erfindung liegt die Aufgabe zugrunde, ein Pilotgefriertrockner-Containment vorzuschlagen, welches insbesondere hinsichtlich
- des manuellen Herbeiführens des Be- und/oder Entladens,
- der mechanischen und dynamischen Beanspruchungen des Trocknungsprodukts während des Be- und/oder Entladens,
- der Prozesssicherheit und/oder
- der Wiederholgenauigkeit und/oder
- der Vereinfachung der Bedienung
verbessert ist. Des Weiteren betrifft die Erfindung ein entsprechend verbessertes Verfahren zum Be- und/oder Entladen eines Pilotgefriertrockners mit einem Pilotgefriertrockner-Containment.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Der Erfindung liegt die Erkenntnis zugrunde, dass bei dem manuell gesteuerten Be- und/oder Entladen eines Pilotgefriertrockners gemäß dem eingangs erläuterten Stand der Technik die Handhabung der Trocknungsprodukte abhängig ist von der von dem Bediener aufgewendeten Sorgfalt. Möglich ist dabei, dass der Bediener über die Manipulationsstange unerwünschte starke Beschleunigungen oder Stöße auf das Trocknungsprodukt aufbringt. Des Weiteren ist möglich, dass die Trocknungsprodukte umkippen oder von einer Aufstandsfläche herunterfallen, was eine Öffnung des Pilotgefriertrockner-Containments mit anschließender Wiederherstellung der erforderlichen Reinheitsbedingungen erforderlich machen kann oder zumindest eine temporäre Unterbrechung des Vorgangs des Be- und/oder Entladens nach sich ziehen kann. Möglich ist auch, dass in dem Fall, dass der Bediener die erforderlichen Bewegungen der Manipulationsstangen nicht exakt (einerseits hinsichtlich der Richtung und andererseits hinsichtlich des Weges) ausführt, die Trocknungsgefäße nicht an einem vorbestimmten Ort angeordnet sind, der ideal für den Gefriertrocknungsprozess und/oder die weitere Bewegung des Trocknungsprodukts während des Be- und/oder Entladens ist.

Auf Grundlage dieser Erkenntnis schlägt die Erfindung vor, dass zunächst das Pilotgefriertrockner-Containment eine Wandung aufweist, mit der ein Innenraum des Pilotgefriertrockner-Containments begrenzt ist. An der Wandung ist mindestens ein Handschuh unter Abdichtung gehalten. Der Handschuh weist einen Handschuhinnenraum auf, der von außen für eine Hand des Bedieners zugänglich ist.

Erfindungsgemäß ist in dem Innenraum des Pilotgefriertrockner-Containments ein Handbetätigungsorgan angeordnet, welches unmittelbar von der Hand des Bedieners betätigt werden kann. Das Handbetätigungsorgan ist dabei für die Betätigung durch die Hand entsprechend einem Freiheitsgrad gelagert und beweglich. Ist das Handbetätigungsorgan beispielsweise als Handbetätigungsrad ausgebildet, ist das Handbetätigungsrad mit einem Dreh-Freiheitsgrad ausgebildet. Ist hingegen das Handbetätigungsorgan als Schieber ausgebildet, erfolgt die Führung des Handbetätigungsorgans entlang eines Schiebe-Freiheitsgrads, der translatorisch oder kurvenförmig sein kann.

Erfindungsgemäß führt die Betätigung des Handbetätigungsorgans durch die Hand des Bedieners zu einer Bewegung eines Förderorgans. Die Bewegung des Förderorgans entspricht dabei der Bewegung des mindestens einen Trocknungsproduktes (bei dem es sich insbesondere um ein Fläschchen oder ein Vial handelt). Möglich ist, dass lediglich einzelne Trocknungsprodukte, eine Gruppe von Trocknungsprodukten oder eine Stellflächen-Trocknungsproduktgruppe bewegt wird. Das Förderorgan kann dabei unmittelbar an dem mindestens einen Trocknungsprodukt anliegen oder mindestens ein Übertragungselement kann zwischen dem Förderorgan und dem mindestens einen Trocknungsprodukt angeordnet sein. Möglich ist beispielsweise, dass eine Stellflächen-Trocknungsproduktgruppe von Trocknungsprodukten in einer Aufnahmeeinrichtung wie einem Rahmen angeordnet ist. In diesem Fall kann das Förderorgan der Rahmen selbst sein oder das Förderorgan liegt an dem Rahmen an oder tritt mit diesem in Wechselwirkung. Das Förderorgan kann dabei beispielsweise als Be- und/oder Entladeteil, als Schlitten, Schieber, Schlittenträger u. ä. ausgebildet sein.

Im Rahmen der Erfindung erfolgt aber keine freie Bewegung des Förderorgans infolge der manuellen Betätigung des Handbetätigungsorgans, wie dies gemäß dem Stand der Technik erfolgt. Vielmehr ist die Bewegung des Förderorgans durch eine Führung entlang eines durch die Führung vorgegebenen Freiheitsgrades geführt. Beispielsweise kann die Führung einen Freiheitsgrad entlang der Zuförderrichtung, Abförderrichtung, Beladerichtung und/oder Entladerichtung vorgeben. Möglich ist auch, dass die Führung einen Freiheitsgrad in Richtung der Hochachse zum Heben oder Senken ist. Schließlich ist auch möglich, dass die Führung einen Freiheitsgrad für eine Verdrehung um die Hochachse vorgibt.

Vorteilhaft ist an der erfindungsgemäßen Lösung, dass durch eine Betätigung des Handbetätigungsorgans im Innenraum des Pilotgefriertrockner-Containments die geführte Bewegung des Förderorgans herbeigeführt werden kann. Nicht erforderlich ist somit, dass für eine Betätigung des Handbetätigungsorgans die Hände aus dem Handschuhinnenraum entfernt werden müssen, um bspw. einen Antrieb für eine Hubeinrichtung außerhalb des Pilotgefriertrockner-Containments zu betätigen mit dem Erfordernis eines anschließenden Wiedereinführens der Hand in den Handschuh, wie dies gemäß dem Stand der Technik der Fall ist (obwohl natürlich auch für einzelne Bewegungen während des Be- und/oder Entladens eine Betätigung außerhalb des Pilotgefriertrockner-Containments erfolgen kann). Für eine besondere Ausgestaltung werden aber jegliche Betätigungen zur Steuerung und Herbeiführung des Be- und/oder Entladens vorgenommen, ohne dass der Bediener überhaupt die Hände aus den Handschuhen und damit aus dem Innenraum des Pilotgefriertrockner-Containments entfernen muss.

Im Rahmen der Erfindung ist möglich, dass lediglich eine Führung des Förderorgans erfolgt, während der Bediener manuell die Größe des Weges des Förderorgans entsprechend den jeweiligen Erfordernissen frei bestimmen kann. Für einen besonderen Vorschlag der Erfindung weist das Pilotgefriertrockner-Containment einen Anschlag, eine Rastierung oder eine Verriegelung auf, der oder die die Bewegung des Förderorgans entlang des Freiheitsgrads einseitig oder beidseitig begrenzt. Hierbei kann eine Rastierung dem Bediener eine haptische Rückmeldung geben, wenn eine vorbestimmte Stellung entlang des Freiheitsgrades erreicht ist. Unter Umständen kann auch ein Überdrücken der Rastierung erfolgen, um eine Bewegung noch über diese Stellung hinaus herbeizuführen. Ein Lösen der Rastierung kann ebenfalls durch Aufbringung von Kräften entlang des Freiheitsgrades erfolgen. Eine Verriegelung gibt eine Stellung entlang des Freiheitsgrades vor, die lediglich durch eine zusätzliche manuelle Entriegelung gelöst werden kann, womit dann erst die Bewegung entlang des Freiheitsgrades wieder ermöglicht wird. Schließlich kann ein Anschlag eine Anfangs- und Endstellung des Förderorgans entlang des Freiheitsgrades vorgeben. Hierbei können der Anschlag, die Rastierung oder die Verriegelung auf das Förderorgan selber, die Antriebsverbindung zwischen Handbetätigungsorgan und Förderorgan und/oder das Handbetätigungsorgan einwirken.

Gemäße einem Vorschlag der Erfindung ist das Handbetätigungsorgan ein Handbetätigungsschalter. Der Handbetätigungsschalter aktiviert und/oder deaktiviert einen Antrieb, mittels dessen das Förderorgan bewegt wird. Möglich ist beispielsweise, dass (grundsätzlich dem eingangs genannten Stand der Technik entsprechend) der Antrieb ein elektrischer Antrieb zum Heben und Senken eines Hubtisches ist. Erfindungsgemäß ist aber in diesem Fall der Handbetätigungsschalter im Innenraum des Pilotgefriertrockner-Containments angeordnet, so dass der Bediener den Handbetätigungsschalter durch die Handschuhe betätigen kann. Durchaus möglich ist aber auch, dass über den Handbetätigungsschalter und den zugeordneten Antrieb ein anderes Förderorgan oder eine Bewegung entlang eines anderen Freiheitsgrades gesteuert wird.

Grundsätzlich möglich ist, dass lediglich ein Handschuh und/oder ein Handbetätigungsschalter in dem Pilotgefriertrockner-Containment vorhanden sind/ist. Für einen weiteren Vorschlag der Erfindung weist das Pilotgefriertrockner-Containment zwei Handschuhe und zwei Handbetätigungsschalter auf. In diesem Fall steuern die Handbetätigungsschalter den Antrieb derart an, dass eine Aktivierung oder Deaktivierung des Antriebs nur erfolgt, wenn zwei in den beiden Handschuhen angeordnete Hände jeweils einen der beiden Handbetätigungsschalter betätigen, wobei für die Aktivierung oder Deaktivierung des Antriebs erforderlich sein kann, dass die beiden Handbetätigungsschalter gleichzeitig oder innerhalb eines vorbestimmten Zeitintervalls betätigt werden. Auf diese Weise kann die Bediensicherheit erhöht werden.

Für eine mögliche Ausgestaltung betätigt mindestens ein Handbetätigungsorgan, insbesondere ein Handbetätigungsschalter, einen elektrischen Antrieb, der das Förderorgan in Richtung einer Hochachse in unterschiedliche Hubstellungen bewegt. Um lediglich ein die Erfindung nicht beschränkendes Beispiel zu nennen, kann zwischen dem Antrieb und das Förderorgan (bspw. ein Hubtisch oder ein Schlittenträger) ein Getriebe, insbesondere ein Spindeltrieb, zwischengeordnet sein, um die Hubstellung herbeizuführen.

Grundsätzlich möglich ist, dass der Bediener über das mindestens eine Handbetätigungsorgan oder den mindestens einen Handbetätigungsschalter selber den Anfang und das Ende der Hubstellung steuert und damit die herbeigeführte Hubstellung bestimmt. In diesem Fall ist aber die Exaktheit der herbeigeführten Hubstellung abhängig von der Sorgfalt des Benutzers. Für einen Vorschlag der Erfindung bewegt der elektrische Antrieb das Förderorgan in vorbestimmte Hubstellungen, die beispielsweise zuvor gespeichert oder angelernt sein können. Diese Hubstellungen können dann mit den Höhen von Stellflächen des Gefriertrockners und/oder den Höhen der Zufördereinrichtung oder Abfördereinrichtung korrelieren. Hierzu kann der Antrieb eine geeignete Positions- oder Drehwinkelsteuerung aufweisen. Um lediglich ein die Erfindung nicht beschränkendes Beispiel zu nennen, kann für den elektrischen Antrieb ein Schrittmotor verwendet werden, wobei hier einzelne Schrittstellungen des Schrittmotors mit den automatisch herbeigeführten vorbestimmten Hubstellungen korrelieren können. Das Vorgenannte kann für einzelne Hubstellungen gelten, wobei dann der Benutzer beispielsweise über die Auswahl unterschiedlicher Handbetätigungsschalter eine Bewegung in die den Handbetätigungsschaltern zugeordneten Hubstellungen herbeiführen kann. Für eine besondere Ausführungsform sind die unterschiedlichen Hubstellungen als Sequenz für die während des Be- und/oder Entladevorgangs herbeizuführenden Hubstellungen in einer Speichereinheit abgespeichert und die sukzessive Betätigung des Handbetätigungsorgans führt dann zur sequentiellen Herbeiführung der gespeicherten Hubstellungen nacheinander, so dass automatisch die jeweils erforderliche Hubstellung herbeigeführt werden kann.

Durchaus möglich ist, dass der Benutzer nach Belieben eine Bewegung eines Förderorgans herbeiführen kann, so dass der Benutzer auch frei ist hinsichtlich der Gestaltung der Reihenfolge der Bewegungen. Für einen Vorschlag der Erfindung kann eine Erhöhung der Prozesssicherheit dadurch erfolgen, dass eine Bewegung eines Förderorgans entlang eines durch eine erste Führung vorgegebenen Freiheitsgrades nur möglich ist, wenn das Förderorgan entlang einer durch eine zweite Führung vorgegebenen Freiheitsgrades eine vorbestimmte Stellung erreicht hat. Dies soll anhand des Folgenden (die Erfindung nicht beschränkenden) Beispiels erläutert werden: Möglich ist, dass eine Veränderung der Hubstellung nur dann möglich ist, wenn eine vorbestimmte Ausrichtung des Schlittens, insbesondere die Ausrichtung der Längsachse des Schlittens parallel zur Zuförderrichtung oder Abförderrichtung einerseits und/oder eine Ausrichtung der Längsachse des Schlittens parallel zur Be- und/oder Entladerichtung, herbeigeführt worden ist. Dies kann durch eine entsprechende mechanische Kopplung und Freigabe einer manuellen Herbeiführung der Änderung der Hubstellung nur in den vorbestimmten Drehstellungen erfolgen. Möglich ist aber auch, dass mittels eines Sensors eine Drehstellung des Schlittens erfasst wird und ein elektrischer Antrieb für eine Veränderung der Hubstellung nur herbeigeführt werden kann, wenn auf Grundlage des Sensors detektiert worden ist, dass eine vorbestimmte Drehstellung erreicht worden ist.

Die Erfindung umfasst (wie zuvor erläutert) Ausführungsformen, bei welchen die Steuerung der Bewegung eines Förderorgans durch Betätigung des Handbetätigungsorgans lediglich darin besteht, dass der Benutzer eine Bewegung des Förderorgans (insbesondere mittels eines Antriebs) auslöst und/oder beendet, während die Arbeit für die Bewegung des Förderorgans nicht manuell von dem Benutzer geleistet wird, sondern durch einen Antrieb. Alternativ oder kumulativ kann aber der Benutzer die Arbeit zur Bewegung des Förderorgans verrichten. In diesem Fall kann das Handbetätigungsorgan beispielsweise als Handbetätigungsschieber, Handbetätigungshebel oder Handbetätigungsrad ausgebildet sein, welcher oder welches selber das Förderorgan ausbildet oder über eine geeignete Antriebsverbindung mit dem Förderorgan gekoppelt ist. Hierbei kann die Antriebsverbindung dazu dienen, eine Veränderung der Orientierung des Antriebsmoments oder der Antriebskraft vorzunehmen und/oder eine Übersetzung oder Untersetzung bereitzustellen.

Vorzugsweise weist die Antriebsverbindung dabei ein Getriebe auf. Das Getriebe kann beispielsweise als Spindeltrieb, ein- oder mehrstufiges Stirnradgetriebe, Kegelradgetriebe u. ä. ausgebildet sein. Je nach Über- oder Untersetzung kann eine angestrebte Anpassung der erforderlichen Betätigungskraft erfolgen, womit beispielsweise eine besonders feinfühlige Einstellung herbeigeführt werden kann. Durch die Über- oder Untersetzung kann eine gewünschte Beeinflussung der aufzubringenden Kraft erfolgen und das Verhältnis des Betätigungswegs an dem Handbetätigungsorgan zu der herbeigeführten Weg des Förderorgans vorgegeben werden.

Für eine Ausführungsform der Erfindung können die Trocknungsprodukte während des Gefriertrocknungsprozesses in der Trocknungskammer des Gefriertrockners auf einem Tablar, innerhalb eines Rahmens oder gemeinsam mit einem Zug- oder Schiebekörper angeordnet sein. In diesem Fall kann das Förderorgan des Pilotgefriertrockner-Containments ein Kopplungselement aufweisen, über welches das Förderorgan des Pilotgefriertrockner-Containments mit dem während dem Gefriertrocknungsprozess in der Trocknungskammer des Gefriertrockners angeordneten Rahmen, dem Tablar oder dem Zug- oder Schiebekörper koppelbar ist. Um lediglich ein die Erfindung nicht beschränkendes Beispiel zu nennen, kann das Kopplungselement als eine Art Greifer oder Haken ausgebildet sein, der mit dem Rahmen, dem Tablar oder dem Zug-oder Schiebekörper in Wechselwirkung tritt. Für das Be- und/oder Entladen erfolgt die Kopplung des Förderorgans des Pilotgefriertrockner-Containments mit dem Rahmen, Tablar oder Zug-oder Schiebekörper. Das Förderorgan des Pilotgefriertrockner-Containments wird dann bewegt. Mit dieser Bewegung wird dann auch der Rahmen, das Tablar oder der Zug-oder Schiebekörper bewegt, womit dann das Be- oder Entladen erfolgen kann.

In weiterer Ausgestaltung der Erfindung weist das Förderorgan ein Beladeteil auf. Alternativ oder kumulativ kann das Förderorgan ein Entladeteil aufweisen. Das Beladeteil und/oder Entladeteil weisen/weist (jeweils) eine Schiebefläche auf. Die Schiebefläche kommt mit der Bewegung des Förderorgans zur Anlage an die Trocknungsprodukte und schiebt die Trocknungsprodukte unter Überwindung der Reibung der Trocknungsprodukte mit einer Standfläche, auf der die Trocknungsprodukte stehen, über die Standfläche. Hierbei kann die Standfläche, auf der die Trocknungsprodukte stehen, eine Standfläche der Zufördereinrichtung, der Abfördereinrichtung, des Beladeteils, des Entladeteils, des Schlittens und/oder eine Stellfläche des Pilotgefriertrockners sein. Ein Handbetätigungsrad ist in diesem Fall über eine Antriebsverbindung mit dem Beladeteil und/oder Entladeteil derart verbunden, dass eine manuelle Betätigung des Handbetätigungsrades dazu führt, dass das Beladeteil oder Entladeteil die Trocknungsprodukte über die Standfläche schiebt.

Für die Übertragung der Antriebsbewegung auf das Beladeteil und/oder Entladeteil gibt es vielfältige Möglichkeiten. So ist beispielsweise eine Verwendung eines Spindeltriebs, eines reibschlüssigen Riemens oder eines Zahnriemens u. ä. möglich. Für einen Vorschlag der Erfindung weist die Antriebsverbindung ein Antriebsrad auf. Das Antriebsrad kämmt mit einer Zahnstange des Beladeteils oder Entladeteils. Möglich ist in diesem Fall, dass das Handbetätigungsrad und das Antriebsrad mit einem Abstand in Be- oder Entladerichtung (bei entsprechender Ausrichtung des Be- oder Entladeteils) versetzt zueinander angeordnet sind. Mittels dieses Abstandes kann unter Umständen ermöglicht werden, dass das Beladeteil oder Entladeteil in verhältnismäßig großem Abstand von der Wandung von dem Bediener über das Handbetätigungsrad bewegt werden kann.

Möglich ist des Weiteren, dass das Förderorgan als Schlitten ausgebildet ist. Der Schlitten kann dann das Beladeteil und/oder Entladeteil tragen, welches mit der Schiebefläche zur Anlage an die Trocknungsprodukte kommt und diese unter Überwindung der Reibung der Trocknungsprodukte mit der Standfläche, auf der die Trocknungsprodukte stehen, über die Standfläche schiebt. In diesem Fall kann ein Handbetätigungsrad über eine Antriebsverbindung mit dem Schlitten derart verbunden sein, dass eine manuelle Betätigung des Handbetätigungsrads dazu führt, dass der Schlitten mit dem Beladeteil und/oder Entladeteil (und etwaigen auf dem Schlitten angeordneten Trocknungsprodukten) in die Be- oder Entladerichtung bewegt wird.

Für eine bevorzugte Ausgestaltung der Erfindung sind/ist das Beladeteil und/oder das Entladeteil in unterschiedlichen Ausrichtungen, insbesondere in um 180° um die Hochachse verdrehten Ausrichtungen, an dem Schlitten montierbar. Dies ist erforderlich, wenn für das Beladen das Beladeteil und/oder Entladeteil vor der Stellflächen-Trocknungsproduktgruppe angeordnet sein soll, während das Beladeteil und/oder Entladeteil während des Entladevorgangs hinter der Stellflächen-Trocknungsproduktgruppe angeordnet sein soll, ohne dass hierzu eine Veränderung der Orientierung des Schlittens erforderlich ist.

Eine weitere Lösung der der Erfindung zugrunde liegenden Aufgabe stellt ein Verfahren zum Beladen eines Pilotgefriertrockners dar, bei dem ein Pilotgefriertrockner-Containment Einsatz findet, wie dieses zuvor erläutert ist. In einem derartigen Verfahren erfolgt zunächst ein Aufschieben einer Stellflächen-Trocknungsproduktgruppe auf eine Standfläche eines Schlittens. Während dieses Aufschiebens ist die Standfläche durch das Beladeteil begrenzt, so dass das Beladeteil die Position der Trocknungsgefäße der Stellflächen-Trocknungsproduktgruppe auf dem Schlitten vorgibt. Während des Aufschiebens befindet sich der Schlitten in Höhe der Zufördereinrichtung, womit das Aufschieben ohne die Notwendigkeit des Überwindens eines Höhenversatzes erfolgen kann. Die Drehstellung des Schlittens und des Beladeteils ist während dieses Aufschiebens derart, dass die Längsachse des Beladeteils in Zuförderrichtung orientiert ist.

Hieran anschließend erfolgt in dem erfindungsgemäßen Verfahren ein Anheben des Schlittens mit dem Beladeteil auf die Höhe einer zu beladenden Stellfläche in Reaktion auf eine Betätigung eines Handbetätigungsorgans, wobei diese Betätigung zur Aktivierung und/oder Deaktivierung eines Antriebs erfolgen kann oder die Betätigung die Arbeit zur Veränderung der Höhe leistet.

In dem erfindungsgemäßen Verfahren erfolgt auch eine Veränderung der Ausrichtung der Längsachse des Schlittens und des Beladeteils von einer Ausrichtung in Zuförderrichtung in eine Ausrichtung in Beladerichtung.

Hierbei ist die Reihenfolge einerseits des Anhebens des Schlittens wie zuvor erläutert und einer Veränderung der Ausrichtung der Längsachse beliebig. Möglich ist sogar, dass das Anheben mit zwei Teilhüben erfolgt, zwischen denen dann das Verdrehen erfolgt.

Im Anschluss hieran erfolgt bei dem erfindungsgemäßen Verfahren eine Bewegung des Schlittens in Beladerichtung durch eine Betätigung eines Handbetätigungsorgans, wobei der Weg der Bewegung so angepasst ist, dass der Schlitten in der Endstellung unmittelbar vor der zu beladenen Stellfläche angeordnet ist.

In einem nächsten Verfahrensschritt erfolgt dann eine Bewegung des Beladeteils relativ zu dem Schlitten in Beladerichtung durch Betätigung eines Handbetätigungsorgans, wobei auch möglich ist, dass diese Bewegung gleichzeitig mit der zuvor genannten Bewegung des Schlittens in Beladerichtung herbeigeführt werden kann. Mit der Bewegung des Beladeteils werden die Trocknungsprodukte von dem Schlitten auf eine Stellfläche des Pilotgefriertrockners geschoben. Hiermit ist das eigentliche Beladen einer Stellflächen-Trocknungsproduktgruppe abgeschlossen.

Möglicherweise schließen hieran folgende Verfahrensschritte an:
a) Durch eine Betätigung eines Handbetätigungsorgans erfolgt eine Bewegung des Beladeteils relativ zu dem Schlitten in Entladerichtung, womit das Beladeteil aus dem Pilotgefriertrockner bewegt wird.
b) Gleichzeitig oder anschließend oder zuvor erfolgt eine Bewegung des Schlittens in Entladerichtung durch eine Betätigung mindestens eines Handbetätigungsorgans, um den Schlitten von der Stirnfläche der Stellfläche weg zu bewegen und aus dem Innenraum des Pilotgefriertrockners herauszubewegen.

Im Anschluss hieran können weitere Beladeschritte ausgeführt werden, um weitere Stellflächen zu beladen, wobei dann jeweils die zugeordnete Höhe der dann zu beladenden Stellflächen mittels der Hubeinrichtung herbeigeführt werden müssen.

Eine weitere Lösung der der Erfindung zugrunde liegenden Aufgabe stellt ein Verfahren zum Entladen eines Pilotgefriertrockners, der ein Pilotgefriertrockner-Containment, wie dieses zuvor erläutert worden ist, aufweist, dar.

In diesem Verfahren erfolgt ein Anheben des Schlittens und des Entladeteils auf die Höhe eines Zwischenraums, der zwischen den zu entladenden Trocknungsprodukten auf einer Stellfläche des Pilotgefriertrockners und einer darüber angeordneten Stellfläche ausgebildet ist. Das Anheben erfolgt dabei in Reaktion auf eine Betätigung eines Handbetätigungsorgans, wobei das Anheben durch einen Antrieb erfolgen kann oder durch die manuell geleistete Arbeit erfolgen kann.

In dem erfindungsgemäßen Verfahren zum Entladen erfolgt eine Bewegung des Entladeteils in Beladerichtung in Reaktion auf eine Betätigung eines Handbetätigungsorgans. Mit dieser Bewegung passiert das Entladeteil durch den Zwischenraum die Trocknungsprodukte, ohne in Kontakt mit den Trocknungsprodukten (und der darüber angeordneten Stellfläche) zu kommen. Das Entladeteil wird somit oberhalb der Trocknungsgefäße an diesen vorbeigeführt und in eine Stellung gebracht, die in einer Draufsicht hinter den Trocknungsprodukten im Innenraum des Pilotgefriertrockners angeordnet ist.

In dieser herbeigeführten Stellung hinter den Trocknungsprodukten erfolgt dann ein Absenken des Schlittens und damit auch des Entladeteils derart, dass eine Schiebefläche des Entladeteils in Entladerichtung vor den Trocknungsprodukten angeordnet ist.

Wird dann in einem weiteren Verfahrensschritt das Entladeteil in Reaktion auf eine Betätigung eines Handbetätigungsorgans in Entladerichtung bewegt, werden die Trocknungsprodukte von der Schiebefläche des Entladeteils von der Stellfläche auf eine Standfläche des Schlittens geschoben.

Hieran anschließend kann der Schlitten in Reaktion auf eine Betätigung eines Handbetätigungsorgans in Entladerichtung bewegt werden, um den Schlitten aus dem Innenraum des Pilotgefriertrockners herauszubewegen. Möglich ist, dass im Anschluss hieran ein Absenken des Schlittens in Reaktion auf eine Betätigung eines Handbetätigungsorgans in die Höhe einer Abfördereinrichtung erfolgt und/oder eine Veränderung der Ausrichtung der Längsachse des Schlittens und des Entladeteils von der Ausrichtung in Be- oder Entladerichtung in die Ausrichtung in Abförderrichtung erfolgt.

Auch hier ist möglich, dass der Vorgang für mehrere Stellflächen wiederholt wird mit unterschiedlichen Hubstellungen der Hubeinrichtung entsprechend den Höhen der zu entladenden Stellflächen.

Eine weitere Lösung der der Erfindung zugrunde liegenden Aufgabe stellt ein Verfahren dar, bei dem das zuvor erläuterte Verfahren zum Beladen des Pilotgefriertrockners mit dem zuvor erläuterten Verfahren zum Entladen des Pilotgefriertrockners kombiniert wird. Möglich ist, dass in diesem Fall zwischen dem Verfahren zum Beladen und dem Verfahren zum Entladen ein Verfahrensschritt ausgeführt wird, in dem die Montage des Entladeteils an dem Schlitten von einer ersten Ausrichtung in eine zweite Ausrichtung verändert wird, wobei die unterschiedlichen Ausrichtungen insbesondere eine Verdrehung um 180° um die Hochachse sind. Diese unterschiedlichen Ausrichtungen werden im Folgenden auch einerseits als Beladekonfiguration und andererseits als Entladekonfiguration beschrieben. Möglich ist, dass dann in dem Verfahren zum Beladen des Pilotgefriertrockners in der Beladekonfiguration an dem Schlitten sowohl das Entladeteil als auch das Beladeteil montiert sind, während dann für das Entladen in der Entladekonfiguration lediglich das Entladeteil an dem Schlitten montiert ist.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einer Teil-Draufsicht schematisch eine Gefriertrocknungsanlage mit einem Containment.
- **Fig. 2**: zeigt in einer räumlichen Darstellung eine Gefriertrocknungsanlage im Bereich des Containments mit einer Be- und Entladeeinrichtung.
- **Fig. 3**: zeigt in einer räumlichen Darstellung eine Hubeinrichtung mit Bedieneinheit, Handbetätigungsorganen und Schlittenträger.
- **Fig. 4**: zeigt in einer räumlichen Darstellung eine Hubeinrichtung mit elektrischem Antrieb, Flansch, Handbetätigungsorganen und Schlittenträger.
- **Fig. 5**: zeigt in einer räumlichen Darstellung einen teilgeschnittenen Flansch mit integriertem berührungslosem Sensor.
- **Fig. 6**: zeigt in einer räumlichen Darstellung einen Faltenbalg mit Flanschen.
- **Fig. 7**: zeigt in einer räumlichen Darstellung einen Schlitten mit Handbetätigungsorganen, Führungen und Antriebsrad.
- **Fig. 8**: zeigt in einer räumlichen Darstellung eine Führung für ein Entladeteil.
- **Fig. 9**: zeigt in einer räumlichen Darstellung Handbetätigungsorgane mit zugeordneten Antriebssträngen des Schlittens und des Entladeteils.
- **Fig. 10**: zeigt in einer räumlichen Ansicht von unten einen Grundkörper eines Schlittens mit Aufnahmen für den Antriebsstrang und Lager desselben.
- **Fig. 11**: zeigt in einer räumlichen Ansicht ein Entladeteil.
- **Fig. 12**: zeigt in einer räumlichen Ansicht ein Beladeteil.
- **Fig.13**: zeigt in einer räumlichen Darstellung das Beladeteil und Entladeteil in aneinander montiertem Zustand.
- **Fig. 14**: zeigt in einer räumlichen Darstellung einen Schlitten mit Handhabungsorganen und Antriebsrad und Be- und Entladeteil in einer Beladekonfiguration.
- **Fig. 15**: zeigt in einer räumlichen Darstellung den Schlitten mit Handhabungsorganen und Antriebsrad und dem Entladeteil in einer Entladekonfiguration.
- **Fig. 16**: zeigt stark schematisiert ein Verfahren zum Beladen eines Gefriertrockners.
- **Fig. 17 bis Fig. 28**: zeigen in räumlichen Darstellungen unterschiedliche Betriebszustände der Gefriertrocknungsanlage mit dem Gefriertrockner und der Be- und Entladeeinrichtung während eines Verfahrens zum Beladen des Gefriertrockners, insbesondere während eines Verfahrens gemäß Fig. 16.
- **Fig. 29**: zeigt stark schematisiert ein Verfahren für eine Veränderung der Beladekonfiguration in die Entladekonfiguration.
- **Fig. 30**: zeigt stark schematisiert ein Verfahren zum Entladen eines Gefriertrockners.
- **Fig. 31 bis 42**: zeigen in räumlichen Darstellungen unterschiedliche Betriebszustände des Gefriertrockners und der Be- und Entladeeinrichtung während eines Verfahrens zum Entladen des Gefriertrockners, insbesondere während eines Verfahrens gemäß Fig. 30.

### FIGURENBESCHREIBUNG

In dem vorliegenden Anmeldungstext wird teilweise für Bauelemente oder -gruppen, die sich hinsichtlich der Funktion und/oder Gestaltung ähneln oder entsprechen, dieselbe Bezugszahl verwendet, wobei dann zur Unterscheidung der Bauelemente oder Baugruppen durch einen zusätzlichen Buchstaben a, b, ... erfolgt. Auf diese Bauelemente oder Baugruppen wird dann in den Anmeldungstext oder den Patentansprüchen mit oder ohne den ergänzenden Buchstaben Bezug genommen. Erfolgt die Bezugnahme ohne den ergänzenden Buchstaben, kann hier eines der mit der Bezugszahl gekennzeichneten Bauelemente oder Baugruppen oder können mehrere oder sämtliche dieser Bauelemente oder Baugruppen gemeint sein.

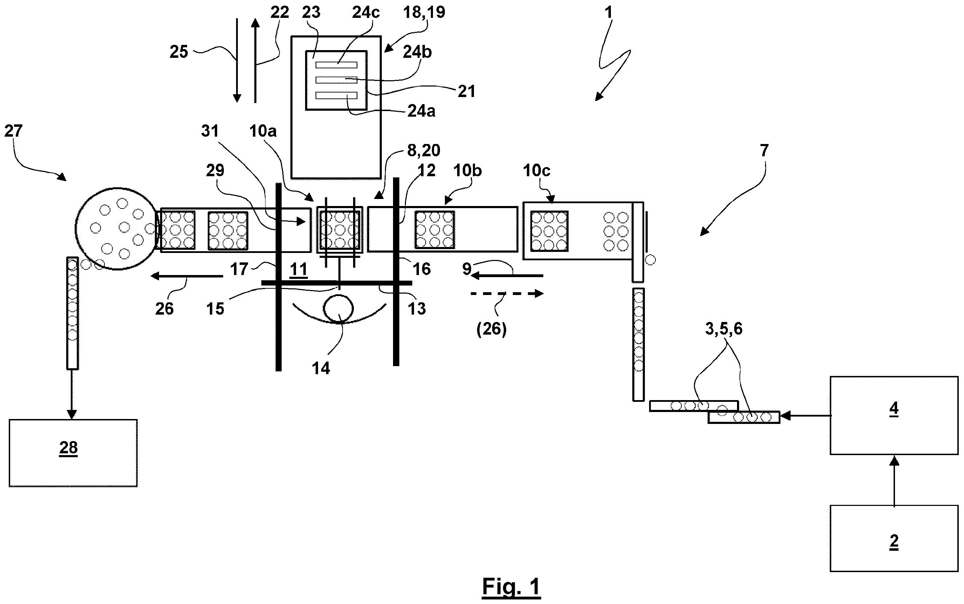

**Fig. 1** zeigt stark schematisiert eine Gefriertrocknungsanlage 1 in einer Ansicht von oben. In der Gefriertrocknungsanlage 1 werden in einer Reinigungsstation 2 Trocknungsbehältnisse 3 gereinigt. Anschließend werden die Trocknungsbehältnisse 3 in einer Befüllungsstation 4 mit einem Trocknungsgut 5 befüllt. Die mit dem Trocknungsgut 5 befüllten Trocknungsbehältnisse 3 werden im Folgenden als Trocknungsprodukte 6 bezeichnet. Vorzugsweise handelt es sich bei dem Trocknungsprodukt 6 um ein mit dem Trocknungsgut 5 befülltes Fläschchen oder Vial. Mittels einer Zufördereinrichtung 7 werden die Trocknungsprodukte 6 einem Containment 8 in eine Zuförderrichtung 9 zugeführt. Hierbei werden mittels der Zufördereinrichtung 7 die Trocknungsprodukte 6 bspw. zunächst nacheinander in einer Reihe gefördert und anschließend mit mehreren nebeneinander angeordneten Teilreihen als Stellflächen-Trocknungsproduktgruppe 10 gefördert, welche dann dem Containment 8 zugeführt wird. Eine Übergabe der Stellflächen-Trocknungsproduktgruppe 10 an einen Innenraum 11 des Containments 8 erfolgt über eine Schleuse 12, bei der es sich um ein sogenanntes Mouse-Hole handeln kann.

Das Containment 8 verfügt über eine Wandung 13, über die der Innenraum 11 von einem Bediener 14 getrennt ist. Über Handschuhe 15, die auch als Stulpenhandschuhe bezeichnet werden können und neben der Hand auch einen Teil oder den gesamten Arm des Bedieners 14 umschließen und eine Abdichtung des Innenraums 11 gegenüber dem Bediener 14 und dessen Umgebung gewährleisten, kann der Bediener 14 Manipulationen, die im Folgenden näher erläutert werden, vornehmen. Der Innenraum 11 kann in andere Richtungen je nach gewünschter Isolationswirkung und Reinheitsanforderungen ebenfalls teilweise oder vollständig geschlossen sein. Für das dargestellte Ausführungsbeispiel verfügt das Containment 8 über Seitenwandungen 16, 17, die die Wandung 13 mit einem Gefriertrockner 18 verbinden. Nach oben und/oder unten kann das Containment 8 offen sein oder an eine Reinheitsanforderungen genügende Be- und Entlüftungsanlage angeschlossen sein.

Zu beachten ist, dass in Fig. 1 der Gefriertrockner abweichend zu den anderen Komponenten der Gefriertrocknungsanlage 1 und entgegen den Zeichnungskonventionen nicht in der Draufsicht, sondern in einer Vorderansicht dargestellt ist.

Für das dargestellte Ausführungsbeispiel ist der Gefriertrockner 18 als Pilotgefriertrockner 19 ausgebildet, so dass das Containment 8 ein Pilotgefriertrockner-Containment 20 ist.

Nachdem die Stellflächen-Trocknungsproduktgruppe 10 dem Innenraum 11 des Containments 8 durch die Schleuse 12 in die Zuförderrichtung 9 zugeführt worden ist und sich die Stellflächen-Trocknungsproduktgruppe 10 in zentraler Position vor einer Tür 21 des Gefriertrockners 18 befindet, wird die Stellflächen-Trocknungsproduktgruppe 10 in eine Beladerichtung 22 in einen Innenraum 23 auf eine Stellfläche 24a des Gefriertrockners 18 aufgeschoben. Hieran anschließend werden weitere Stellflächen-Trocknungsproduktgruppen 10 auf weitere Stellflächen 24b, 24c, ... aufgeschoben.

Hieran anschließend erfolgt die Trocknung der Trocknungsprodukte 6 der Stellflächen-Trocknungsproduktgruppen 10a, 10b, 10c, ... in dem Gefriertrocknungsprozess in dem Gefriertrockner 18.

Dann werden die Stellflächen-Trocknungsproduktgruppen 10a, 10b, 10c, ... sukzessive in eine Entladerichtung 25 von den Stellflächen 24a, 24b, 24c, ... entladen. Befinden sich die Stellflächen-Trocknungsproduktgruppen 10 wieder in der zentralen Position vor der Tür 21 des Gefriertrockners 18, erfolgt eine Abförderung der Stellflächen-Trocknungsproduktgruppen 10 in eine Abförderrichtung 26 mittels einer Abfördereinrichtung 27, mittels welcher die Trocknungsprodukte 6 (ggf. nach einer Vereinzelung derselben) einer Bördelstation 28 zugeführt werden können.

Für das dargestellte Ausführungsbeispiel sind die Zuförderrichtung 9 und die Abförderrichtung 26 vertikal zu der Beladerichtung 22 und der Entladerichtung 25 orientiert. Des Weiteren verfügen für dieses Ausführungsbeispiel die Zuförderrichtung 9 und die Abförderrichtung 26 über denselben Richtungssinn, so dass die Abförderung der Stellflächen-Trocknungsproduktgruppen 10 über eine weitere Schleuse 29 erfolgt, die in der Seitenwandung 17 angeordnet ist, die der Seitenwandung 16 mit der Schleuse 12 gegenüberliegt. Es ist aber für eine ebenfalls von der Erfindung umfasste Variante möglich, dass die Zuförderrichtung 9 und die Abförderrichtung 26 entgegengesetzt orientierte Richtungssinne aufweisen, so dass die Zu- und Abförderung durch dieselbe Schleuse 12 erfolgt und die Zufördereinrichtung 7 und die Abfördereinrichtung 27 (zumindest in einem Teilabschnitt) von denselben Fördermitteln ausgebildet sein können. Auf eine derartige, von Fig. 1 abweichende Ausführungsform wird im Folgenden Bezug genommen. Für diese Ausführungsform ist in Fig. 1 die Abförderrichtung 26 gestrichelt gekennzeichnet.

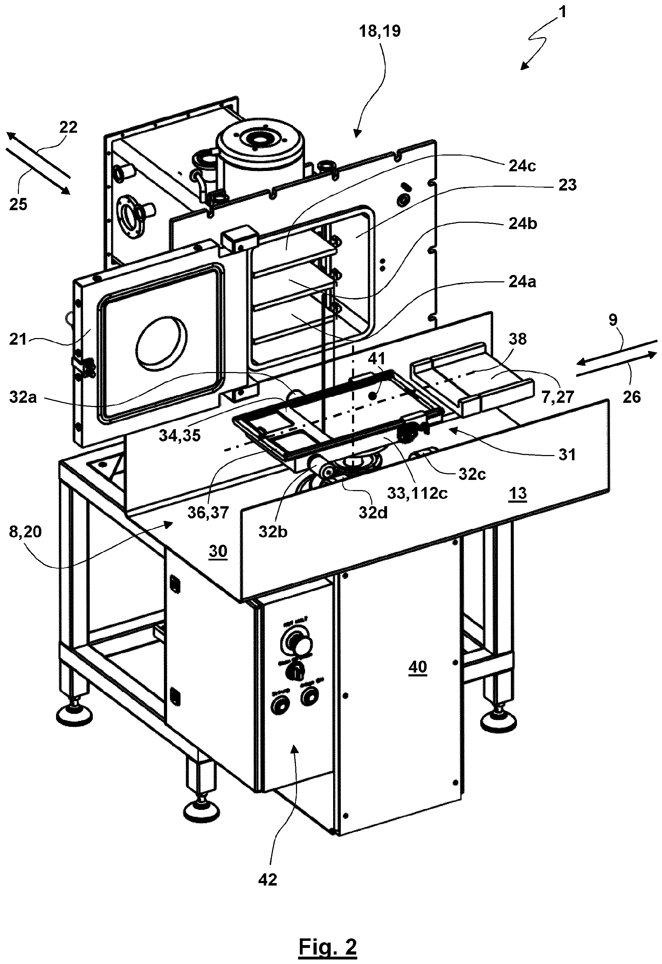

**Fig. 2** zeigt das Containment 8 mit dem Gefriertrockner 18 in einer räumlichen Darstellung, wobei die Wandung 13 teilgeschnitten dargestellt ist und die Seitenwandungen 16, 17 mit der Schleuse 12 nicht dargestellt sind. Das Containment 8 ist in diesem Fall nach unten durch eine Bodenwandung 30 geschlossen. Zu erkennen ist in Fig. 2 eine in der zentralen Position vor der Tür 21 des Gefriertrockners 18 angeordnete Be- und Entladeeinrichtung 31. Die Be- und Entladeeinrichtung 31 verfügt über Handbetätigungsorgane 32a, 32b, 32c, 32d.

Des Weiteren verfügt die Be- und Entladeeinrichtung 31 über einen Schlitten 33, bei welchem es sich auch um einen Rahmenträgertisch handeln kann, ein Beladeteil 34, der als U-förmiger Beladerahmen 35 ausgebildet sein kann, und ein Entladeteil 36, welches als U-förmiger Entladerahmen 37 ausgebildet sein kann. Das Beladeteil 34 und das Entladeteil 36 sind auf den Schlitten 33 montiert. Der Schlitten 33, das Beladeteil 34 und das Entladeteil 36 verfügen über parallel oder koaxiale Längs- oder Hauptachsen 38. Der Schlitten 33 mit dem Beladeteil 34 und dem Entladeteil 36 ist verschieblich in Richtung der Längsachse 38 an einem Schlittenträger 48 gelagert und geführt.

Mittels des Handbetätigungsorgans 32a kann manuell eine Relativbewegung des Schlittens 33 (und damit des an dem Schlitten 33 montierten Beladeteils 34 und Entladeteils 36) gegenüber dem Schlittenträger 48 in Richtung der Längsachse 38 mit beiden Richtungssinnen herbeigeführt werden.

Mittels des Handbetätigungsorgans 32b kann durch eine manuelle Betätigung eine Relativbewegung des Entladeteils 36 (und des in der Betriebsstellung gemäß Fig. 2 fest daran montierten Entladeteils 36) gegenüber dem Schlitten 33 in Richtung der Längsachse 38 mit beiden Richtungssinnen herbeigeführt werden.

Möglich ist des Weiteren eine relative Verdrehung des Schlittenträgers 48 (und damit des Schlittens 33 mit dem daran gehaltenen Beladeteil 34 und Entladeteil 36) um ein Drehlager 142, welches mit zwei relativ zueinander verdrehbaren Drehlagerscheiben 143, 144 gebildet ist. Das Drehlager 142 ermöglich einer Verdrehung um eine Hochachse 39, die vertikal zu der Längsachse 38, zu der Zuförderrichtung 9 und Abförderrichtung 26 sowie der Beladerichtung 22 und der Entladerichtung 25 orientiert ist. Durch die Verdrehung des Schlittenträgers 48 um die Hochachse 39 kann in einer ersten Schwenkstellung eine Ausrichtung der Längsachse 38 parallel zu der Zuförderrichtung 9 und Abförderrichtung 26 erfolgen sowie in einer zweiten Schwenkstellung eine Ausrichtung der Längsachse 38 des Schlittens 33 parallel zur Beladerichtung 22 und zur Entladerichtung 25 erfolgen.

Des Weiteren verfügt die Be- und Entladeeinrichtung 31 über eine Hubeinrichtung 40, über die der Schlittenträger 48 (und damit auch das Beladeteil 34 und das Entladeteil 36) in Richtung der Hochachse 39 angehoben und abgesenkt werden kann. Hierbei erfolgt das Anheben und Absenken insbesondere derart, dass in der in Fig. 2 skizzierten Hubstellung eine Standfläche 41 des Schlittens 33 für die Trocknungsprodukte 6 in einer Ebene mit der Zufördereinrichtung 7 und/oder der Abfördereinrichtung 27 angeordnet ist. In weiteren Hubstellungen kann die Standfläche 41 des Schlittens 33 in einer horizontalen Ebene mit den Standflächen der Stellflächen 24a, 24b, 24c angeordnet sein. Eine Betätigung der Hubeinrichtung 40 und damit die Steuerung der Hubstellung des Schlittens 33 erfolgt über eine manuelle Betätigung der Handbetätigungsorgane 32c, 32d.

Das Containment 8 verfügt über eine Bedieneinheit 42, die hier seitlich der Hubeinrichtung 40 und unterhalb der Bodenwandung 30 angeordnet ist. Über die Bedieneinheit 42 können Vorgaben durch den Bediener 14 erfolgen. Beispielsweise kann ein An- und Ausschalten der Antriebe und Betätigungsmöglichkeiten des Containments 8, insbesondere der Hubeinrichtung 40, erfolgen, es kann ein Not-Aus-Schalter vorhanden sein und es kann eine Umschaltung des Containments 8 von einem Beladevorgang zu einem Entladevorgang und umgekehrt erfolgen.

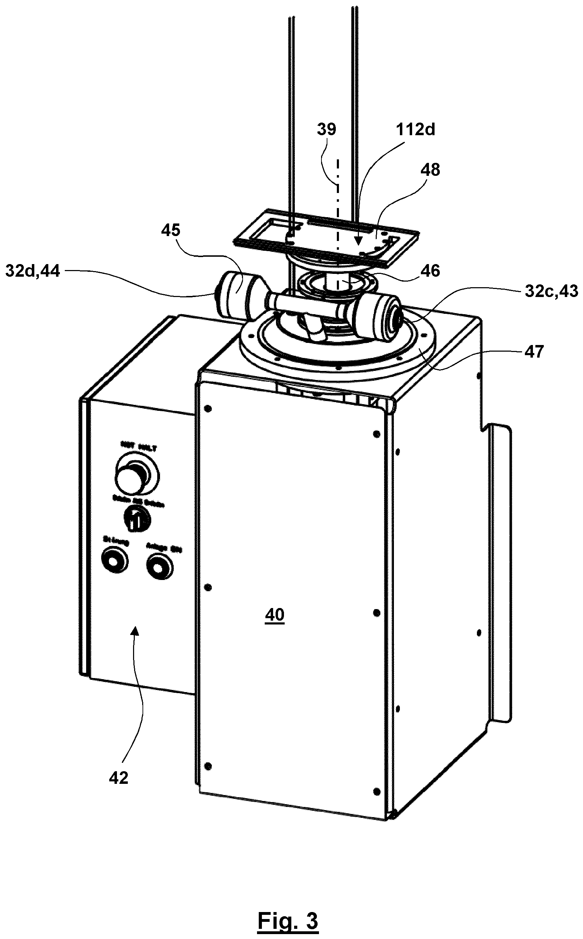

In **Fig. 3** ist die Be- und Entladeeinrichtung 31 im Bereich der Hubeinrichtung 40 und der Bedieneinheit 42 dargestellt. Zu erkennen ist hier, dass die Handbetätigungsorgane 32c, 32d als zwei räumlich voneinander beabstandete Handbetätigungsschalter oder -knöpfe 43, 44 ausgebildet sind. Die Handbetätigungsschalter 43, 44 sind in diesem Fall an einem hantelförmigen Tragkörper 45 angeordnet. Die Handbetätigungsorgane 32c, 32d gewährleisten, dass eine Betätigung der Hubeinrichtung 40 zum Heben und Senken nur erfolgen kann, wenn beide Handbetätigungsorgane 32c, 32d gleichzeitig (oder innerhalb einer vorgegebenen Zeitspanne) betätigt werden.

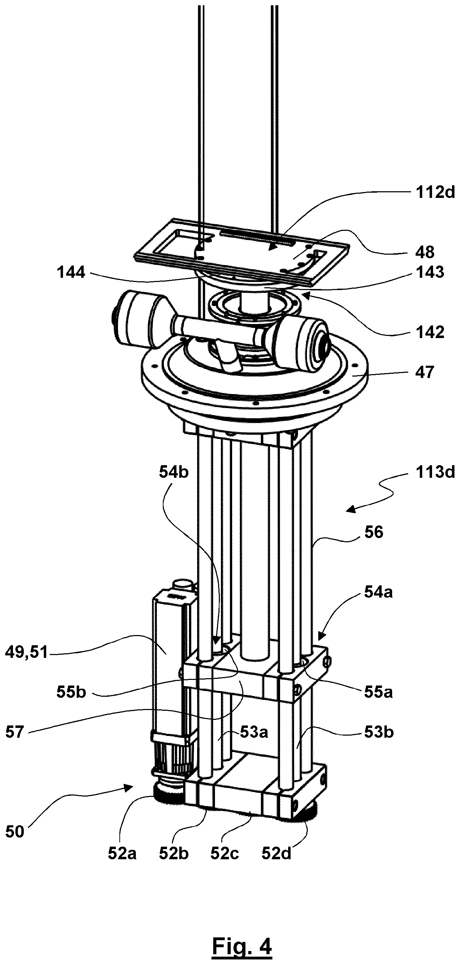

Gemäß **Fig. 4** durchsetzt eine Hubstange 46 der Hubeinrichtung 40 einen Flansch 47, der im Bereich einer Ausnehmung der Bodenwandung 30 unter Abdichtung mit der Bodenwandung 30 und/oder mit einer oberen Wandung des Gehäuses der Hubeinrichtung 40 verschraubt ist. Über die Hubstange 46 kann ein Anheben des Schlittenträgers 48 erfolgen. Der obere Endbereich der Hubstange 46 ist an der Drehlagerscheibe 143 des Drehlagers 142 befestigt, während die andere Drehlagerscheibe 144 des Drehlagers 142 an dem Schlittenträger 48 befestigt ist, womit der Dreh-Freiheitsgrad des Schlittenträgers 48 um die Hochachse 39 gewährleistet wird.

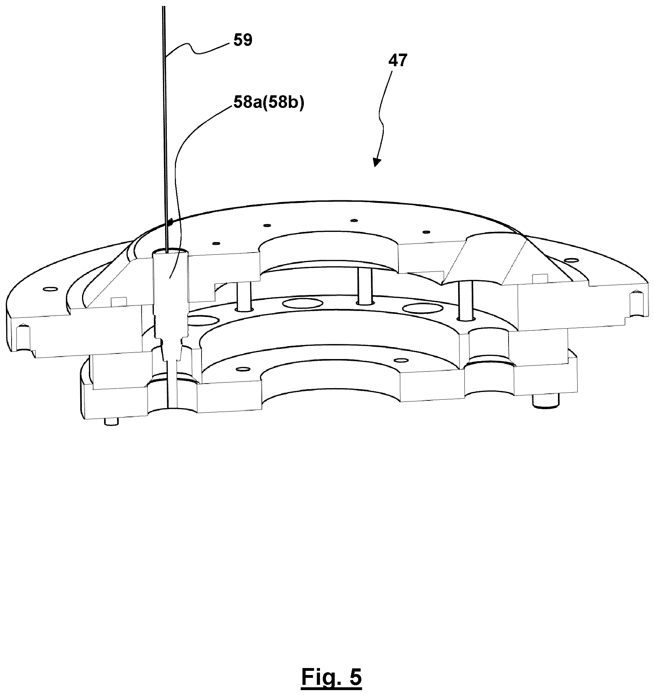

**Fig. 5** zeigt den Antriebsstrang der Hubeinrichtung 40, in dem ein elektrischer Antrieb 49 über eine Antriebsverbindung 50 zur Herbeiführung des Hebens und Senkens des Schlittenträgers 48 mit der Hubstange 46 und dem Schlittenträger 48 in Antriebsverbindung steht. Der elektrische Antrieb 49 ist vorzugsweise als Servomotor 51 ausgebildet. Eine Ansteuerung des Servomotors 51 und damit das Herbeiführen eines Hebens und Senkens des Schlittenträgers 48 erfolgt durch den Bediener mittels manueller Betätigung der Handbetätigungsorgane 32c, 32d. Für das dargestellte Ausführungsbeispiel wird die Abtriebsbewegung des Antriebs 49 über Zahnräder 52a, 52b, 52c, 52d übertragen an Spindeln 53a, 53b. Die Spindeln 53 sind Bestandteile von Spindeltrieben 54a, 54b. In den Spindeltrieben 54 kämmen die Spindeln 53 mit Spindelmuttern 55a, 55b, die von einer in Führungsstangen 56 in Richtung der Hochachse 39 geführten Hubplatte 57 gehalten sind.

In den Flansch 47 sind zwei berührungslose Sensoren 58a, 58b integriert, wobei die Sensoren 58 an unterschiedlichen Umfangswinkel des Flansches 47 um die Hochachse 39 angeordnet sind. Die Sensoren 58 verfügen beispielsweise über einen Sender für einen Laserstrahl 59 sowie einen Empfänger für reflektiertes Licht des Laserstrahls 59. Befindet sich eine vorbestimmte Reflektionsfläche auf der Unterseite des Schlittenträgers 48 im Bereich des Laserstrahls 59, wird der Laserstrahl 59 an der Reflektionsfläche reflektiert und der reflektierte Laserstrahl 59 gelangt zurück zu dem Empfänger des Sensors 58. Ist die Position der Sensoren 58 an dem Flansch 47 einerseits und der Reflektionsflächen an dem Schlittenträger 48 andererseits so aufeinander abgestimmt, dass der Laserstrahl 59 in vorbestimmten Drehstellungen des Schlittenträgers 48 auf die Reflektionsfläche trifft, kann mittels der Sensoren 58 somit eine berührungslose Detektierung der vorbestimmten Drehstellungen erfolgen. Vorzugsweise erfasst dabei ein Sensor 58a, wenn der Schlittenträger 48 und damit der Schlitten 33 mit der Längsachse 38 parallel zur Zuförderrichtung 9 und Abförderrichtung 26 orientiert ist, während der andere Sensor 58b detektiert, wenn die Längsachse 38 parallel zu der Beladerichtung 22 und der Entladerichtung 25 orientiert ist.

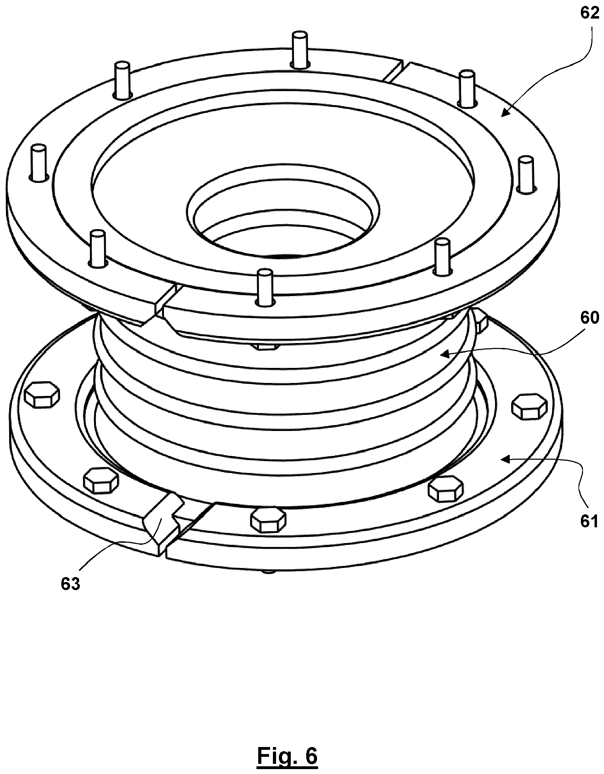

**Fig. 6** zeigt einen Faltenbalg 60, der beispielsweise aus Teflon bestehen kann. Der Faltenbalg 60 ist über einen unteren Flansch 61 an dem Flansch 47 gehalten. Über einen oberen Flansch 62 ist der Faltenbalg 60 an der Drehlagerscheibe 143 des Drehlagers 142 befestigt. Für das dargestellte Ausführungsbeispiel sind die beiden Flansche 61, 62 jeweils als Halbringe ausgebildet zwecks Vereinfachung der Montage und der Hindurchführung des Faltenbalgs 60. Die Flansche 61, 62 können wie dargestellt Ablaufschrägen 63 für Feuchtigkeit aufweisen.

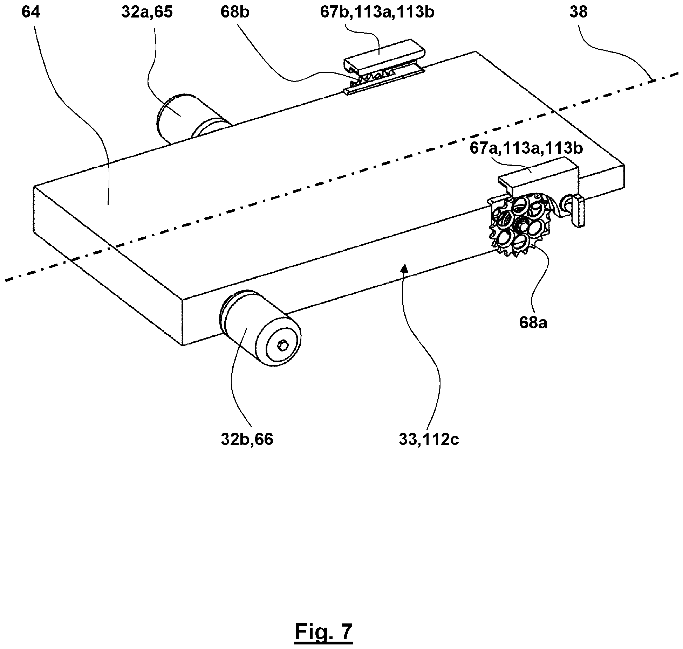

**Fig. 7** zeigt den Schlitten 33. Der Schlitten 33 verfügt über einen plattenförmigen Grundkörper 64. Die Handbetätigungsorgane 32a, 32b sind jeweils als drehbar an dem Grundkörper 64 gelagerte Handbetätigungsräder 65, 66 ausgebildet. Auf beiden Seiten des Grundkörpers 64 sind an dem Grundkörper 64 Führungen 67a, 67b gehalten. Auf beiden Seiten des Grundkörpers 64 ist des Weiteren jeweils ein Antriebsrad 68a, 68b angeordnet, wobei die Antriebsräder 68 um eine Querachse verdrehbar sind. Vorzugsweise befinden sich die Antriebsräder 68a, 68b im Bereich der zugeordneten Führung 67a, 67b. Die Führungen 67 und Antriebsräder 68 dienen der Führung und dem Antrieb des Entladeteils 36 infolge der Betätigung des Handbetätigungsorgans 32b zur Herbeiführung der Relativbewegung des Entladeteils 36 entlang der Längsachse 38 gegenüber dem Grundkörper 64.

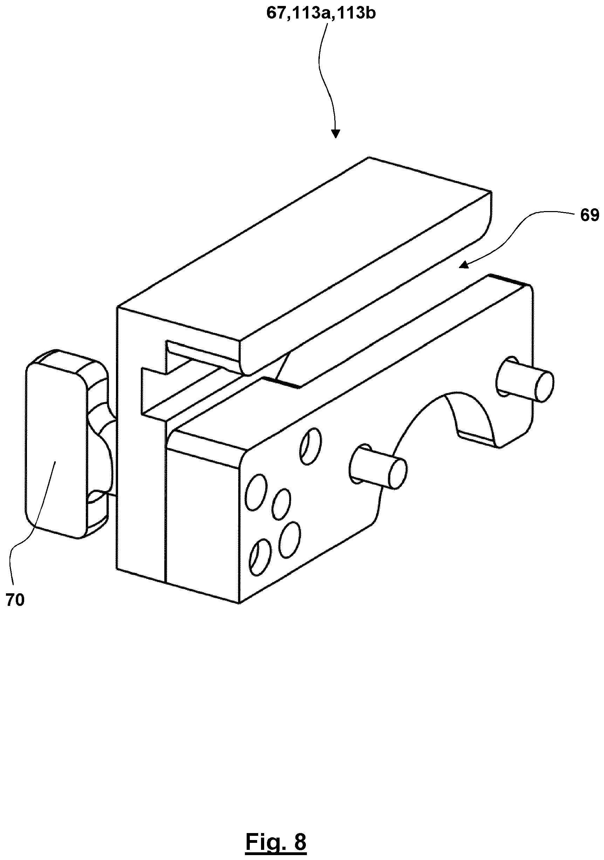

**Fig. 8** zeigt die Führung 67. Die Führung 67 gewährleistet eine translatorische Führung des Entladeteils 36 parallel zu der Längsachse 38. Zu diesem Zweck verfügt die Führung 67 über einen sich in Richtung der Führungsachse erstreckenden Führungskanal 69, in dem ein stangenartiges Führungselement des Entladeteils 36 (welches im Folgenden auch als Seitenschenkel 86, 87 bezeichnet ist) geführt ist. Zu erkennen ist, dass die Führung 67 über eine Flügelmutter 70 verfügt, welche eine vorzugsweise werkzeuglose Montage der Führung 67 an dem Grundkörper 64 ermöglicht.

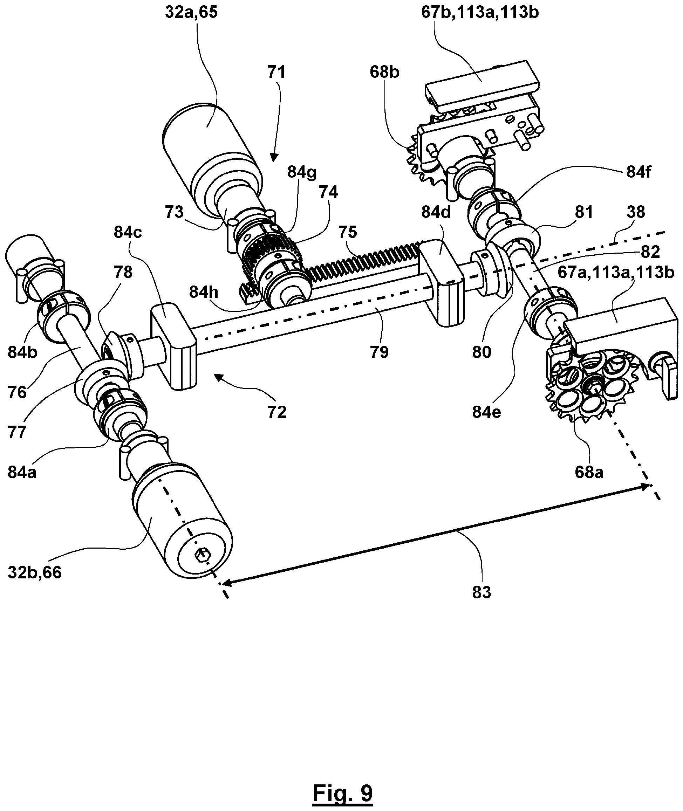

**Fig. 9** zeigt Antriebsverbindungen 71, 72. Die Antriebsverbindung 71 dient der Erzeugung der Bewegung des Schlittens 33 in Richtung der Längsachse 38 relativ zu dem Schlittenträger 48 nach Maßgabe der manuellen Betätigung des Handbetätigungsorgans 32a. Hingegen dient die Antriebsverbindung 72 der Relativbewegung des Entladeteils 36 gegenüber dem Grundkörper 64 des Schlittens 33 in Richtung der Längsachse 38 infolge der Betätigung des Handbetätigungsorgans 32b.

Für das dargestellte Ausführungsbeispiel verfügt die Antriebsverbindung 71 über eine unmittelbar das Handbetätigungsrad 65 tragende Antriebswelle 73, welche in Antriebsverbindung mit einem Antriebszahnrad 74 steht, welches vorzugsweise unmittelbar von der Antriebswelle 73 ausgebildet ist oder von dieser drehfest getragen ist. Das Antriebszahnrad 74 kämmt mit einer Zahnstange 75, die von dem Schlittenträger 48 auf der dem Schlitten 33 zugewandten Oberseite getragen wird. Die Zahnstange 75 ist parallel zur Längsachse 38 orientiert, während die Antriebswelle 73 in Querrichtung orientiert ist.

Die Antriebsverbindung 72 verfügt über eine unmittelbar das Handbetätigungsrad 66 tragende Antriebswelle 67. Die Antriebswelle 76 steht in Antriebsverbindung mit einem Kegelrad 77, welches hier unmittelbar von der Antriebswelle 76 getragen ist oder drehfest mit der Antriebswelle 76 verbunden ist. Das Kegelrad 77 kämmt mit einem Kegelrad 78, welches unmittelbar von einer Zwischenwelle 79 ausgebildet ist oder drehfest von der Zwischenwelle 79 getragen wird. Das Kegelrad 78 ist in einem Endbereich der Zwischenwelle 79 angeordnet. In dem anderen Endbereich der Zwischenwelle 79 ist ein weiteres Kegelrad 80 angeordnet, welches drehfest mit der Zwischenwelle 79 verbunden sein kann oder von dieser ausgebildet ist. Das Kegelrad 80 kämmt mit einem weiteren Kegelrad 81, welches ausgebildet ist oder drehfest getragen ist von einer Achswelle 82, deren Endbereiche die Antriebszahnräder 68a, 68b tragen. Die Antriebswelle 76 und die Achswelle 82 sind parallel zueinander und in Querrichtung orientiert, während sich die Zwischenwelle 79 parallel oder koaxial zur Längsachse 38 erstreckt. In Richtung der Längsachse 38 verfügen die Antriebswelle 76 und Achswelle 82 (bei Projektion in eine Horizontalebene) über einen Abstand 83. Die Antriebswelle 76 ist dabei in einem vorderen Endbereich des Grundkörpers 64 des Schlittens 33 angeordnet, während die Achswelle 82 in einem hinteren Endbereich des Grundkörpers 64 des Schlittens 33 angeordnet ist. Der Abstand 83 beträgt vorzugsweise mindestens 50 %, mindestens 60 %, mindestens 70 %, mindestens 80 % oder sogar mindestens 90 % der Erstreckung des Grundkörpers 64 oder des Schlittens 33 in Richtung der Längsachse 38.

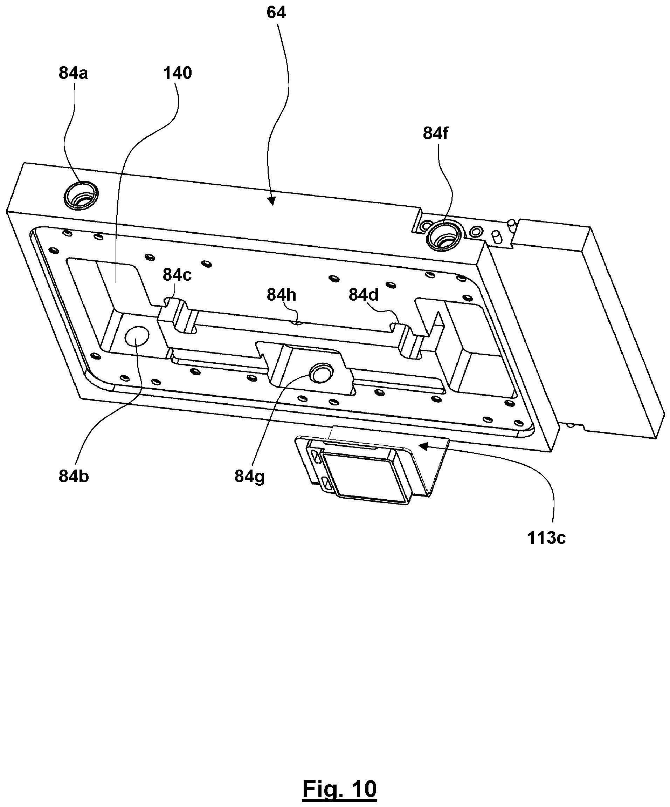

In der Unteransicht des Grundkörpers 64 gemäß **Fig. 10** ist zu erkennen, dass dieser die erforderlichen Ausnehmungen 140 für die Aufnahme der Antriebsverbindungen 71, 72 aufweist sowie die erforderlichen Lager 84 für die Lagerung der Antriebswelle 76, der Zwischenwelle 79, der Achswelle 82 und der Antriebswelle 73 ausbildet oder aufnimmt.

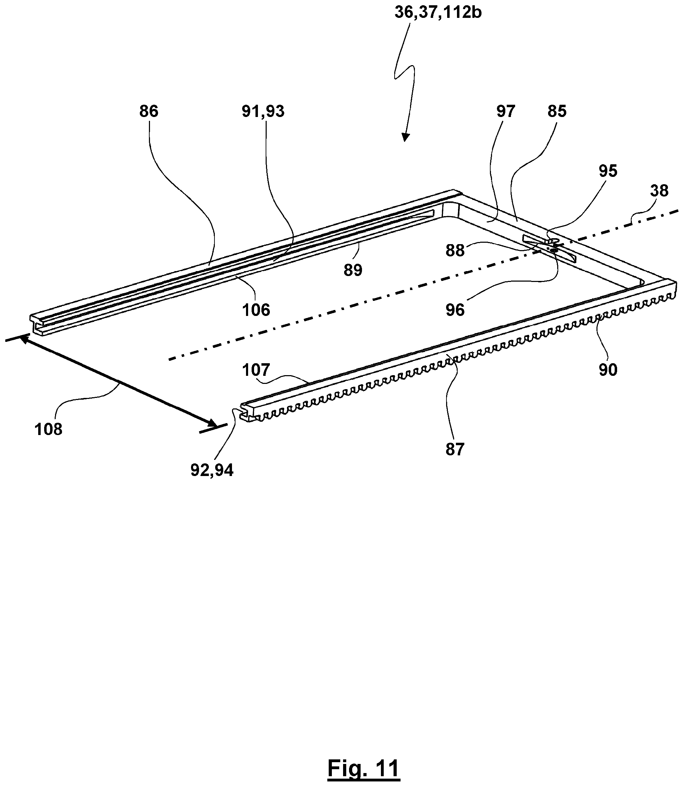

**Fig. 11** zeigt das als Entladerahmen 37 ausgebildete Entladeteil 36. Das Entladeteil 36 ist U-förmig ausgebildet mit einem Grundschenkel 85 und zwei Seitenschenkeln 86, 87. Die Seitenschenkel 86, 87 erstrecken sich von dem Grundschenkel 85 vertikal und parallel zueinander sowie parallel zur Längsachse 38. Der Grundschenkel 85 verfügt (hier mittig) über eine Aufnahme 88, die hier als horizontaler Schlitz mit oben angeordnetem, einseitig offenem Langloch 95 sowie unterer Befestigungsbohrung oder Gewindebohrung 96 ausgebildet ist. Die Seitenschenkel 86, 87 bilden auf der Unterseite jeweils eine Zahnstange 89, 90 aus. Die Zahnstangen 89, 90 kämmen mit den Antriebszahnrädern 86a, 86b. Des Weiteren bilden die Seitenschenkel 86, 87 auf ihren einander zugewandten Stirnseiten Aufnahmen 91, 92 aus. Für das dargestellte Ausführungsbeispiel sind die Aufnahmen 91, 92 als parallel zur Längsachse 38 verlaufende Nuten 93, 94 ausgebildet, die in dem dem Grundschenkel 85 benachbarten Endbereich geschlossen sind, während diese in dem anderen Endbereich offen sind. Auf der Innenseite bildet der Grundschenkel 85 eine Schiebefläche 97 aus, an welcher bei dem Entladen Trocknungsprodukte zur Anlage kommen, so dass die Trocknungsprodukte in Entladerichtung 25von dem Entladeteil 36 geschoben werden können.

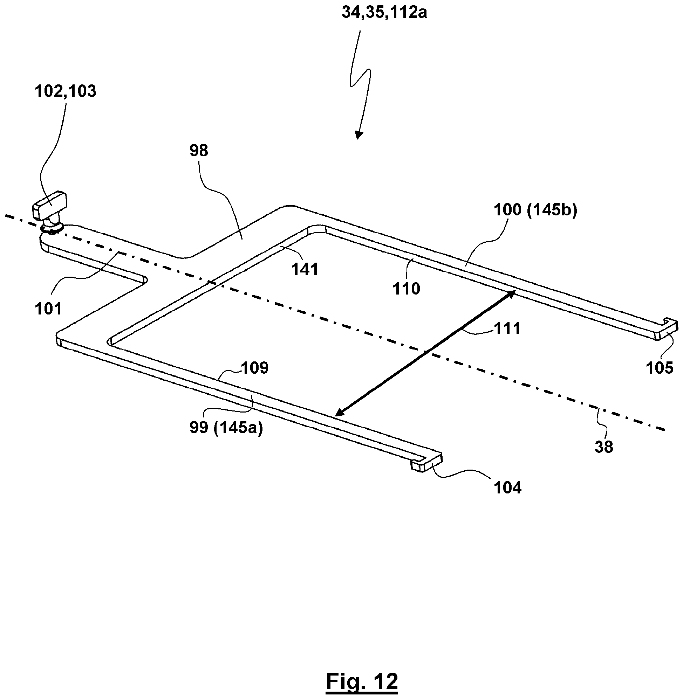

**Fig. 12** zeigt das als Beladerahmen 35 ausgebildete Beladeteil 34. Das Beladeteil 34 ist U-förmig ausgebildet und weist einen Grundschenkel 98 sowie zwei Seitenschenkel 99, 100 auf. Die Seitenschenkel 99, 100 erstrecken sich vertikal von dem Grundschenkel 98 und parallel zueinander sowie zur Längsachse 38. Auf der den Seitenschenkeln 99, 100 abgewandten Seite erstreckt sich von dem Grundschenkel 98 ein Fortsatz oder Steg 101 mit einem Befestigungselement 102, über welches das Beladeteil 34 im Bereich der Aufnahme 88 an dem Grundschenkel 85 des Entladeteils 66 befestigt werden kann.

Für das dargestellte Ausführungsbeispiel ist das Befestigungselement 102 eine verdrehbar an dem Steg 101 gelagerte Flügelschraube 103, die über das Langloch 95 in die Aufnahme 88 des Entladeteils 36 eintreten kann und mit der Gewindebohrung 96 verschraubt werden kann. An den Endbereichen der Seitenschenkel 99, 100 verfügt das Beladeteil 34 über lateral nach außen orientierte Fortsätze 104, 105.

Das Beladeteil 34 bildet im Bereich des Grundschenkels 98 eine Schiebefläche 141 aus, an welcher die Trocknungsprodukte 6 während des Beladens zur Anlage kommen, so dass die Trocknungsprodukte 6 in Beladerichtung 22 geschoben werden können.

Für die Montage des Beladeteils 34 mit dem Entladeteil 36 werden Seitenschenkel 99, 100 des Beladeteils 34 von der offenen Seite in die Nuten 93, 94 des Entladeteils 36 eingeführt, bis die Fortsätze 104, 105 des Beladeteils 34 zur Anlage kommen an die Stirnseiten der freien Endbereiche der Seitenschenkel 86, 87 des Entladeteils 36, womit ein Anschlag zur Vorgabe der montierten Stellung vorgegeben ist, in der die Flügelschraube 103 mit der Gewindebohrung 96 verschraubt werden kann.

Die Seitenschenkel 86, 87 des Entladeteils 36 bilden (neben den Nuten 93, 94) laterale Führungsflächen 106, 107 aus, die während des Entladens eine laterale Führung der Trocknungsprodukte 6 gewährleisten. Die Führungsflächen 106, 107 verfügen dabei über einen lateralen Abstand 108.

Die Seitenschenkel 99, 100 des Beladeteils 34 bilden einander zugewandte laterale Führungsflächen 109, 110 aus, mittels welcher die Trocknungsprodukte 6 während des Beladens lateral geführt sind. Die Führungsflächen 109, 110 weisen einen lateralen Abstand 111 auf.

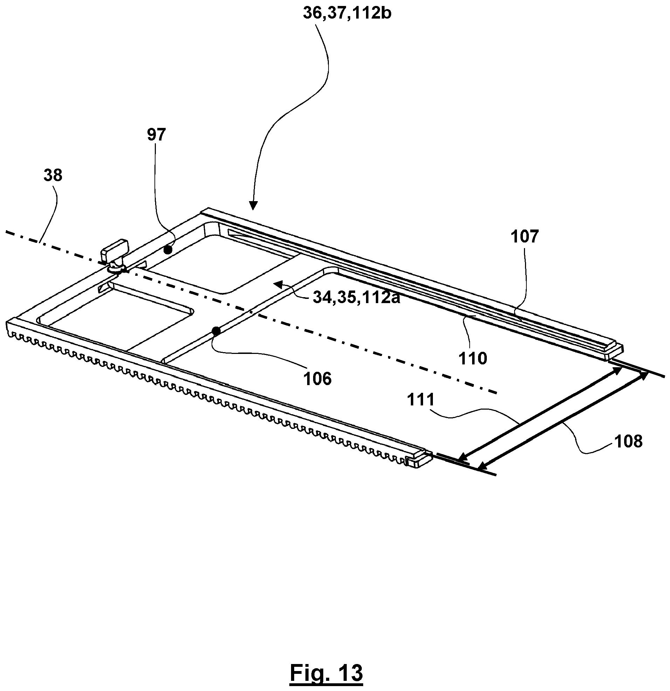

**Fig. 13** zeigt das Beladeteil 34 in in das Entladeteil 36 und an diesem befestigten Zustand. Der Abstand 111 der Führungsflächen 109, 110 ist kleiner (insbesondere im Bereich von 0,05 mm bis 2 cm oder 0,1 mm bis 1,5 cm oder 0,1 cm bis 1 cm kleiner) als der Abstand 108 der Führungsflächen 106, 107.

Die Schiebeflächen 97, 141 sind in parallelen lateralen Vertikalebenen angeordnet und in Richtung der Längsachse 38 zueinander versetzt und die Flächennormalen der Schiebeflächen 97, 141 verfügen über denselben Richtungssinn. Hierbei erfolgt die Vorgabe des Versatzes durch die Erstreckung des Stegs 101 in Richtung der Längsachse 38.

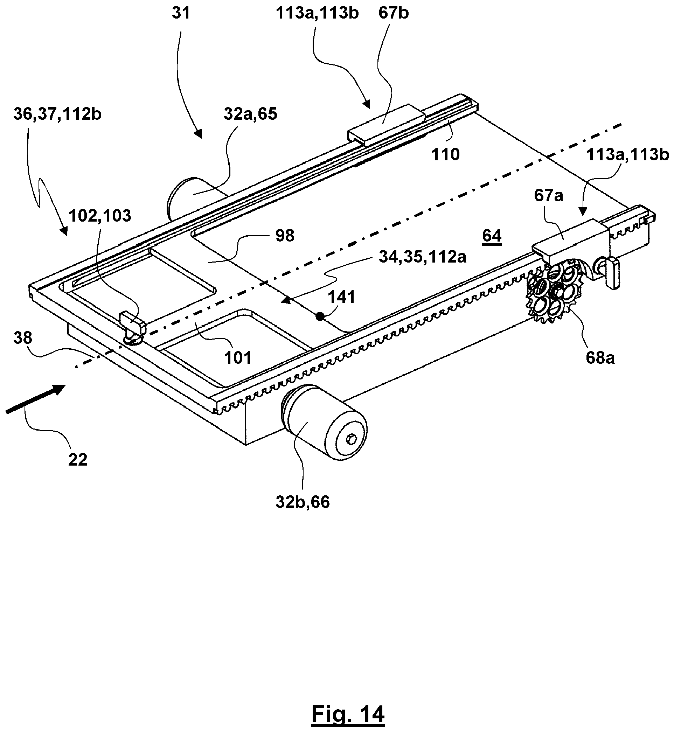

**Fig. 14** zeigt eine Beladekonfiguration, in der das Beladeteil 34 gemäß Fig. 13 mit dem Entladeteil 36 montiert ist und das Entladeteil 36 mit dem Schlitten 33 montiert ist, indem die Seitenschenkel 86, 87 mit den Zahnstangen 89, 90 in die Führungsnuten 69 der Führungen 67 eingeführt sind und die Antriebsräder 68 in Eingriff mit den Zahnstangen 89, 90 gebracht sind. Fig. 14 zeigt den Beginn der Bewegung in Beladerichtung 22, bei der die Schiebefläche 141 den größten Abstand von dem Gefriertrockner 18 hat. Durch Betätigung des Handbetätigungsorgans 32b kann eine Bewegung des Beladeteils 34 in Beladerichtung 22 herbeigeführt werden, mit welcher die Schiebefläche 141 die Trocknungsprodukte 6 in Beladerichtung 22 schieben kann, wobei eine laterale Führung der Trocknungsprodukte 6 mittels der Führungsflächen 109, 110 erfolgt. Hierbei ist die Schiebefläche 97 des Entladeteils 36 nicht wirksam. Die Bewegung in Beladerichtung 22 kann dabei über einen Beladehub erfolgen, bis der Eingriff des Antriebsrads 68 (hinter der Schiebefläche 141) in den Endbereichen der Zahnstangen 89, 90 erfolgt, die benachbart zu dem Grundschenkel 85 angeordnet sind. Somit kann die Schiebefläche 141 sogar über die dem Gefriertrockner 18 zugewandte Stirnseite des Grundkörpers 64 des Schlittens 33 und dessen Standfläche 41 hinausgeschoben werden, unter Umständen bis über eine Stellfläche 24 des Gefriertrockners 18. Die Länge des Beladehubs und das Ausmaß, wie weit die Schiebefläche 141 über die Stirnseite des Grundkörper 64 hinausgeschoben werden kann, kann über die Länge des Stegs 101 vorgegeben werden.

In der Beladekonfiguration gemäß Fig. 14 erstrecken sich die Seitenschenkel 86, 87 des Entladeteils 36 von dem Grundschenkel 85 in Richtung des Gefriertrockners 18.

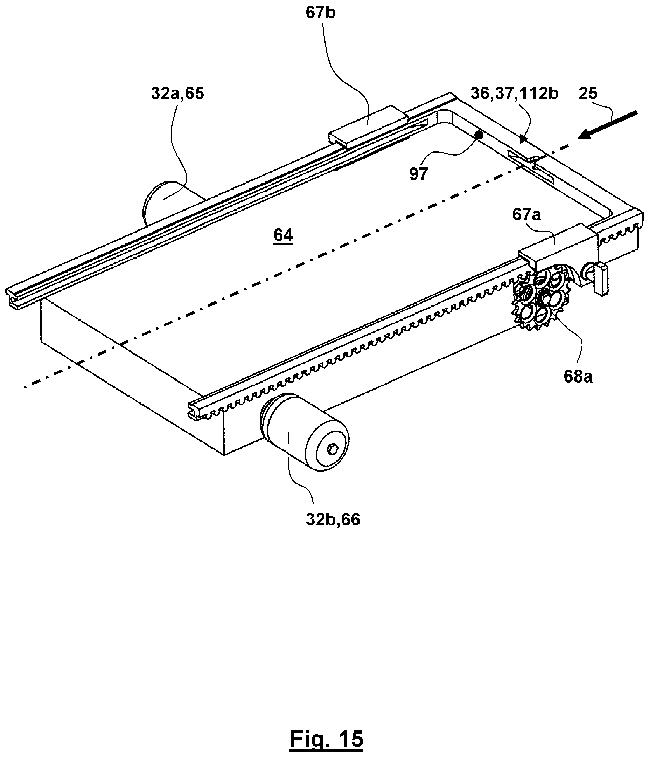

**Fig. 15** zeigt eine Entladekonfiguration, in der sich die Seitenschenkel 86, 87 von dem Grundschenkel 85 in eine Richtung von dem Gefriertrockner 8 weg erstrecken. Für einen Wechsel von der Beladekonfiguration in die Entladekonfiguration und umgekehrt ist somit ein Herausnehmen des Entladeteils 64 aus den Führungen 67, eine Verdrehung des Entladeteils 36 um die Hochachse um 180° sowie eine erneute Montage mit den Führungen 67 mit der veränderten Orientierung erforderlich. In der Entladekonfiguration gemäß Fig. 15 ist das Beladeteil 34 von dem Entladeteil 36 demontiert. Fig. 15 zeigt das Entladeteil 36 am Ende der Entladebewegung in die Entladerichtung 25. Am Anfang der Entladebewegung erstreckt sich das Entladeteil 36 nahezu vollständig über die dem Gefriertrockner 18 zugewandte Stirnseite des Grundkörpers 64 hinaus, so dass die Schiebefläche 97 weit im Inneren des Innenraums 23 des Gefriertrockners 18 und insbesondere hinter den auf einer Stellfläche 24 angeordneten Trocknungsprodukten 6 angeordnet sein kann.

Das Beladeteil 34, das Entladeteil 36, die Hubeinrichtung 40 und der Schlitten bilden gemeinsam mit den zugeordneten Antriebsverbindungen jeweils ein Förderorgan 112. Mittels der Bewegung der Förderorgane 112 kann jeweils eine Bewegung der Trocknungsprodukte 6 bzw. einer Stellflächen-Trocknungsproduktgruppe 10 herbeigeführt werden: Das Förderorgan 112a schiebt mit dem Beladeteil 34 unmittelbar die Trocknungsprodukte 6 und die Stellflächen-Trocknungsproduktgruppe 10 in Beladerichtung 22. Entsprechend schiebt das Entladeteil 36 des Förderorgans 112b unmittelbar die Trocknungsprodukte 6 und die Stellflächen-Trocknungsproduktgruppe 10 in Entladerichtung 25. Der Schlitten 33 des Förderorgans 112c bewegt die auf der Standfläche 41 aufstehenden Trocknungsprodukte 6 und die Stellflächen-Trocknungsproduktgruppe 10 in Be- oder Entladerichtung 22, 25. Die Hubeinrichtung 40 und der Schlittenträger 48 sowie der Schlitten 33 des Förderorgans 112d bewegen die Trocknungsprodukte 6 der Stellflächen-Trocknungsproduktgruppe 10 (mittelbar unter Zwischenordnung des Schlittens 33) in Richtung der Hochachse 39 zum Heben und Senken. Schließlich verdrehen die Drehlagerscheibe 144 und der Schlittenträger 48 mit dem daran gehaltenen Schlitten 33 und dem Beladeteil 34 und/oder dem Entladeteil 36 als Förderorgan 112e die Stellflächen-Trocknungsproduktgruppe 10 um die Hochachse 39. In diesem Fall ist kein gesondertes Handbetätigungsorgan für die Herbeiführung der Verdrehung des Förderorgans 112e vorhanden - vielmehr wird das Handbetätigungsorgan in diesem Fall unmittelbar von der Angriffsfläche der Hand des Bedieners an dem Schlitten 33, dem Schlittenträger 48 oder dem Entladeteil 36 gebildet.

Die vorgenannten Bewegungen der Förderorgane 112 sind jeweils durch Führungen 113 geführt: Die Führung 113a des Förderorgans 112a erfolgt durch die Führungen 67. Die Führung 113b des Förderorgans 112b erfolgt ebenfalls durch die Führungen 67. Die Führung 113c des Förderorgans 112c erfolgt über eine hier nicht näher dargestellte translatorische Längsführung zwischen dem Schlitten 33 und dem Schlittenträger 48. Die Führung 113d des Förderorgans 112d erfolgt über die Führungsstangen 56 und deren führende Aufnahme in der Hubplatte 57. Für die Verdrehung des Förderorgans 112e bildet das Drehlager 142 die Führung 113b.

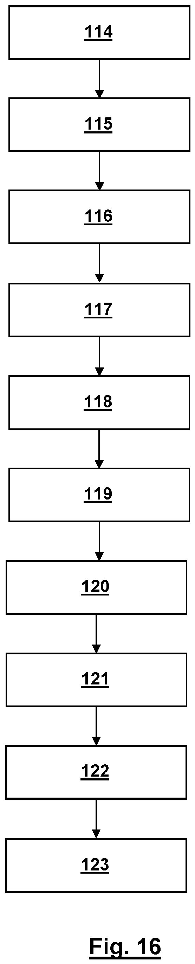

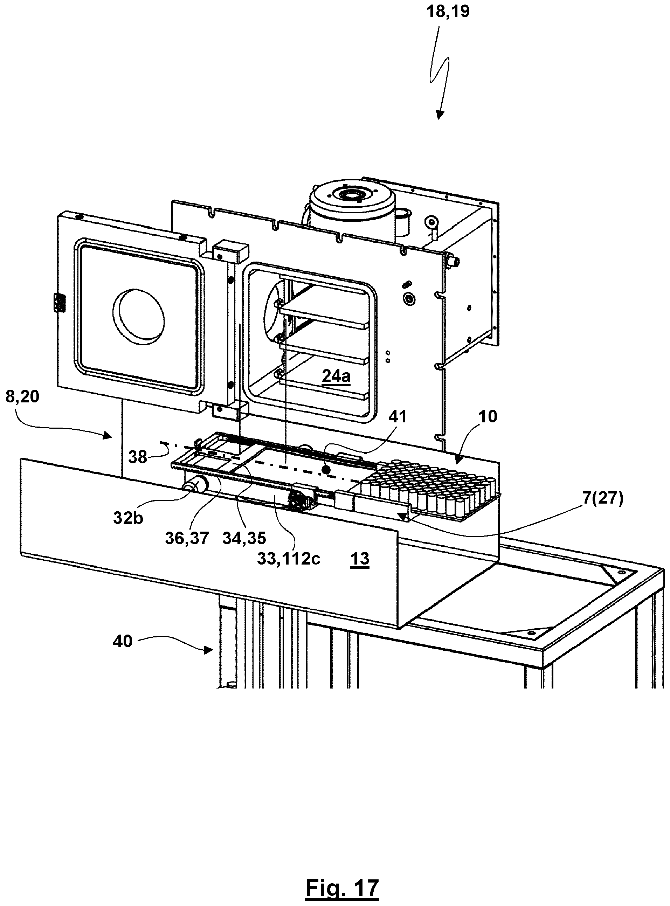

**Fig. 16** zeigt schematisch ein Verfahren zum Beladen eines Gefriertrockners 18, wobei bei der Beschreibung des Verfahrens Bezug genommen wird auf die Darstellungen in die folgenden Fig. 17 bis 28:
In einem Verfahrensschritt 114 wird eine Stellflächen-Trocknungsproduktgruppe 10 mit Trocknungsprodukten 6 über die Zufördereinrichtung 7 in die Zuförderrichtung 9 dem Innenraum 11 des Containments 8 (insbesondere durch eine Schleuse 12) zugeführt. Eine Stirnseite des Grundkörpers 64 des Schlittens 33 ist bündig zu der Zufördereinrichtung 7 angeordnet und die Höhe einer Standfläche 41 des Schlittens entspricht der Höhe der Zufördereinrichtung 7, so dass ein Überschieben der Stellflächen-Trocknungsproduktgruppe 10 von der Zufördereinrichtung 7 auf die Standfläche 41 möglich ist. Mittels einer Betätigung der beiden Handbetätigungsschalter 43, 44 kann ausgelöst werden, dass die Hubeinrichtung 40 die Standfläche 41 in die richtige, zuvor abgespeicherte oder angelernte Hubstellung bringt. Des Weiteren kann durch Betätigung des Handbetätigungsorgans 32a eine etwaige Lücke zwischen der Zufördereinrichtung 7 und dem Grundkörper 64 des Schlittens 33 geschlossen werden. Schließlich kann manuell eine Verschwenkung des Schlittens 33 um die Hochachse 39 vorgenommen sein, um die Längsachse 38 des Schlittens 33 parallel oder koaxial zu der Zufördereinrichtung 9 auszurichten. An dem Entladeteil 36 ist das Beladeteil 34 montiert. Das Entladeteil 36 befindet sich mit dem Beladeteil 34 in der Beladekonfiguration, in welcher sich die Seitenschenkel 86, 87 des Entladeteils 36 von dem Grundschenkel 85 in Richtung der Zufördereinrichtung 7 erstrecken (Fig. 17).

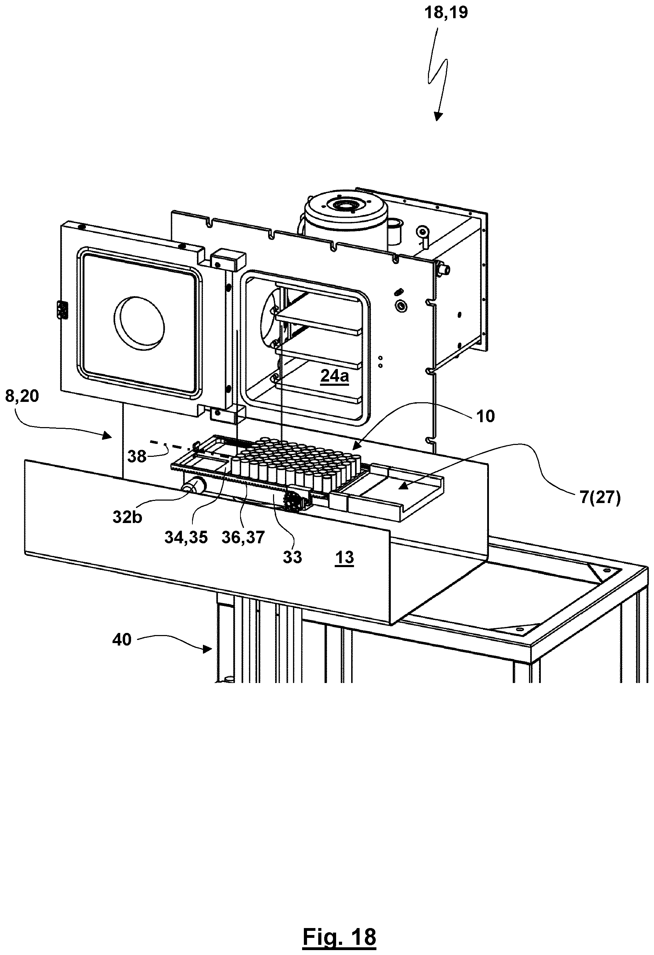

In einem Verfahrensschritt 115 erfolgt das Überschieben der Stellflächen-Trocknungsproduktgruppe 10 von der Zufördereinrichtung 7 auf die Standfläche 41 des Schlittens, bis die vorderste Reihe der Trocknungsprodukte 6 zur Anlage kommt an die Schiebefläche 141 des Beladeteils 34 (**Fig. 18**).

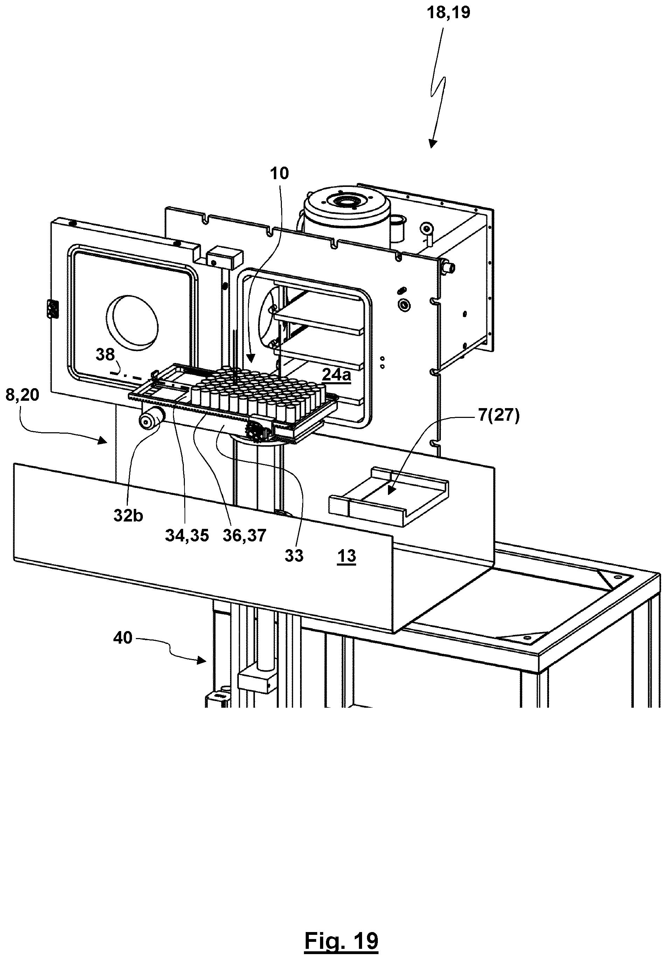

In einem Verfahrensschritt 116 betätigt der Bediener 14 die Handbetätigungsorgane 32c, 32d, womit die Hubeinrichtung 40 betätigt wird. In der Hubeinrichtung 40 ist durch Programmierung oder einen Anlernvorgang die Hubstellung gemäß **Fig. 19** gespeichert, so dass die Hubeinrichtung 40 nach einmaliger Betätigung der Handbetätigungsorgane 32c, 32d automatisch die Hubstellung gemäß Fig. 19 herbeiführt. Hierbei ist die gespeicherte und automatisch herbeigeführte Hubstellung derart vorgegeben, dass die Höhe der Standfläche 41 der Höhe der zu beladenden Stellfläche 24a entspricht.

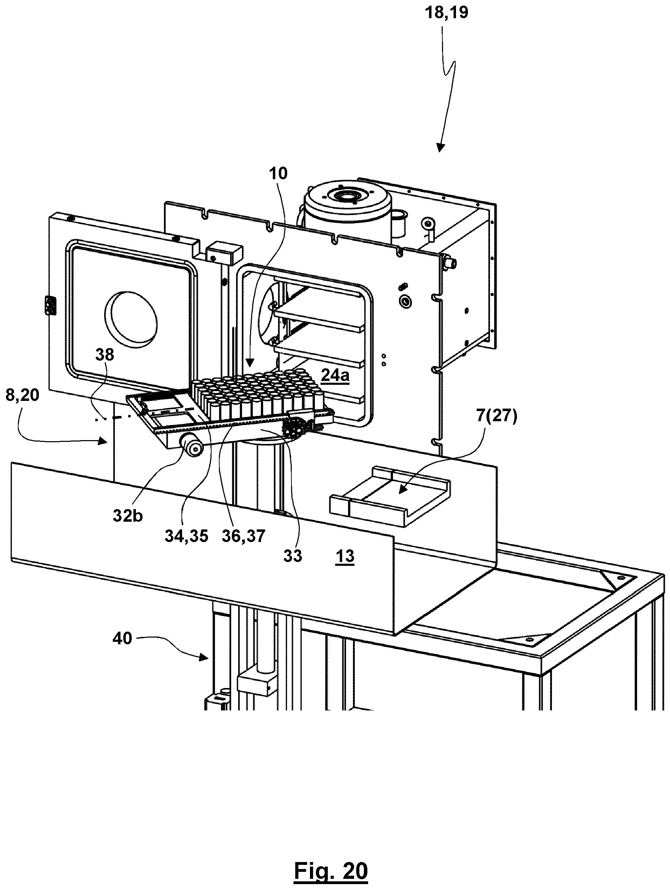

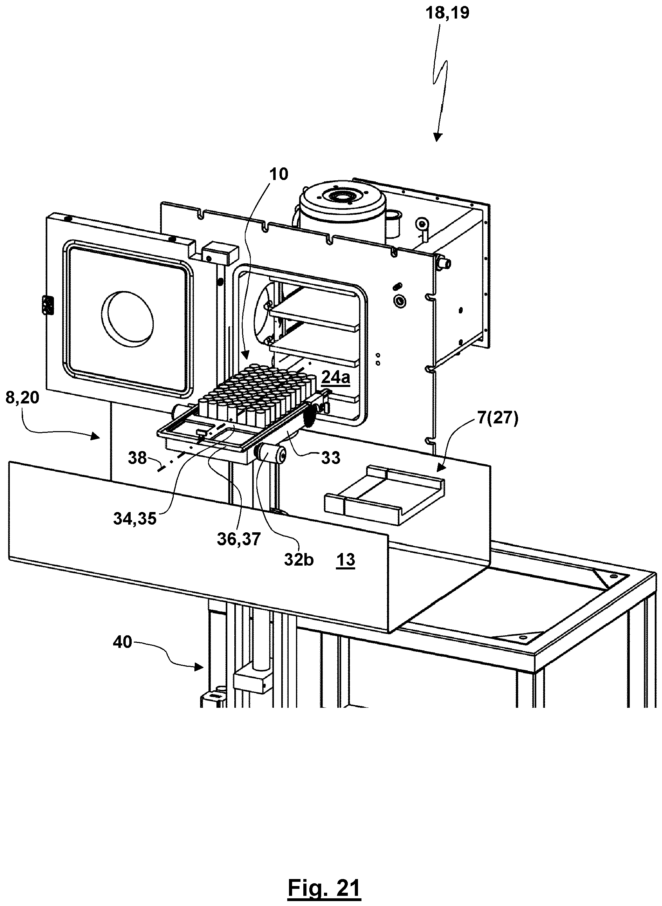

In einem Verfahrensschritt 117 erfolgt eine manuelle Verdrehung des Schlittenträgers 48 mit dem Schlitten 33 und dem Beladeteil 34 sowie dem Entladeteil 36 und den auf der Standfläche 41 angeordneten Trocknungsprodukten 6 um die Hochachse derart, dass die anfängliche Orientierung der Längsachse 38 in die Zuförderrichtung 9 und Abförderrichtung 26 verändert wird in eine Orientierung in Richtung der Beladerichtung 22 und der Entladerichtung 25 (**Fig. 20****,** **21**). In der Endstellung gemäß Fig. 21 erstrecken sich die Seitenschenkel 86, 87 des Entladeteils 36 von dem Grundschenkel 85 in Richtung des Gefriertrockners 18.

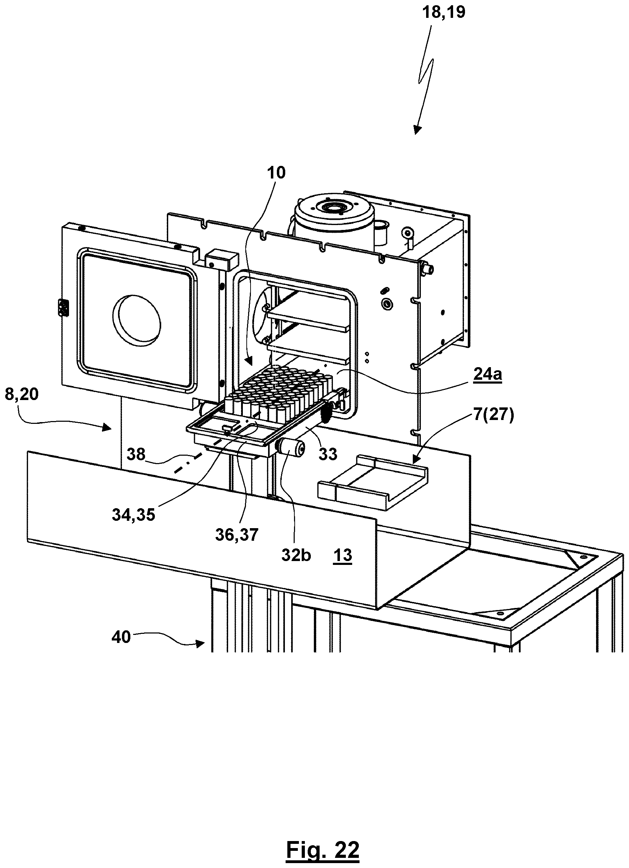

In einem Verfahrensschritt 118 wird dann das Handbetätigungsorgan 32a derart betätigt, dass der Schlitten 33 in Beladerichtung 22 bewegt wird, bis die in Bewegungsrichtung vordere Stirnseite des Grundkörpers 64 des Schlittens 33 zur Anlage an eine Stirnseite der Stellfläche 64a kommt und ein bündiges Überschieben der Stellflächen-Trocknungsproduktgruppe 10 von der Standfläche 41 des Schlittens 33 auf die Stellfläche 24a möglich ist (**Fig. 22**).

(Optional möglich ist, dass eine Verschwenkung des Schlittens um die Hochachse 39 in einer Hubstellung erfolgt, die höher oder niedriger ist als die Höhe der Stellfläche 24a, während dann vor der Annäherung des Schlittens 33 an die Stellfläche 24a ein geringfügiges Absenken oder Anheben erfolgt.)

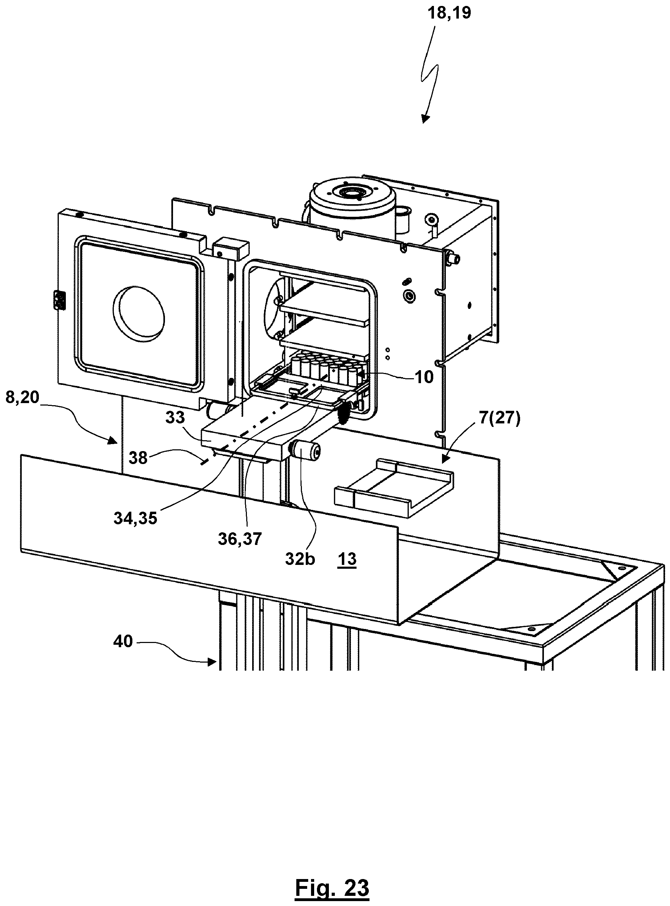

In einem Verfahrensschritt 119 kann dann die Stellflächen-Trocknungsproduktgruppe 10 von der Standfläche 11 des Schlittens 33 auf die Stellfläche 24a übergeschoben werden (**Fig. 23**). Dies erfolgt durch Betätigung des Handbetätigungsorgans 32b und Relativbewegung des Entladeteils 36 mit dem daran montierten Beladeteil 34 in Beladerichtung 22. Hierbei erfolgt das Schieben der Trocknungsprodukte 6 der Stellflächen-Trocknungsproduktgruppe 10 mittels der Schiebefläche 141 des Beladeteils 34. In Fig. 23 ist zu erkennen, dass hierbei die Schiebefläche 141 in den Innenraum 23 des Gefriertrockners 18 eintritt und die vordere Stirnfläche der Stellfläche 24a überfährt, so dass die Trocknungsprodukte 6 der Stellflächen-Trocknungsproduktgruppe 10 vollständig auf die Stellfläche 24a aufgeschoben werden können.

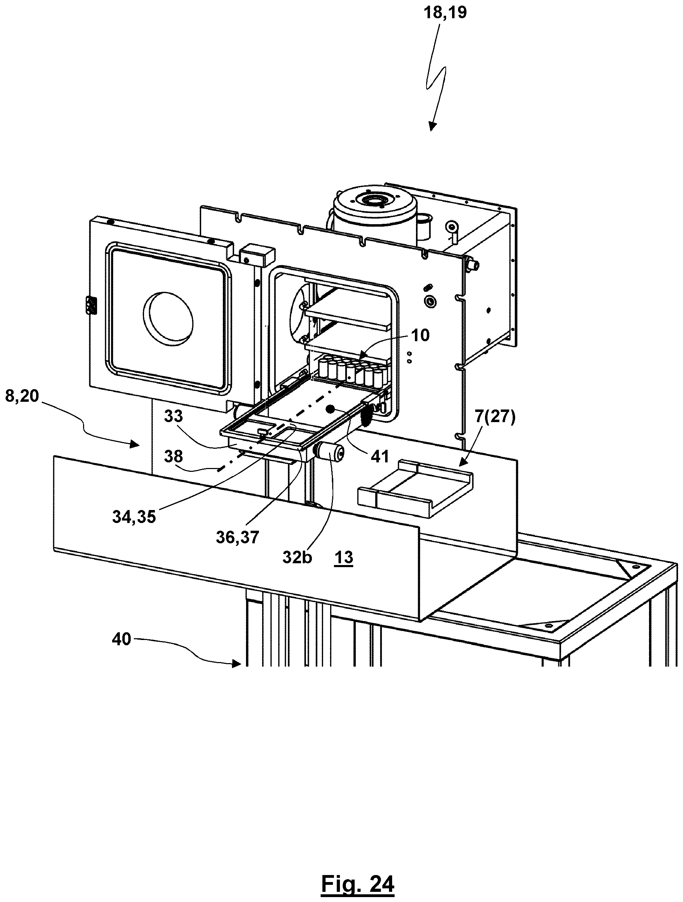

In einem Verfahrensschritt 120 werden dann durch erneute Betätigung des Handbetätigungsorgans 32b das Entladeteil 36 mit dem daran befestigten Beladeteil 34 wieder in die Entladerichtung 24 in die Ausgangsstellung zurückbewegt (vgl. **Fig. 24**).

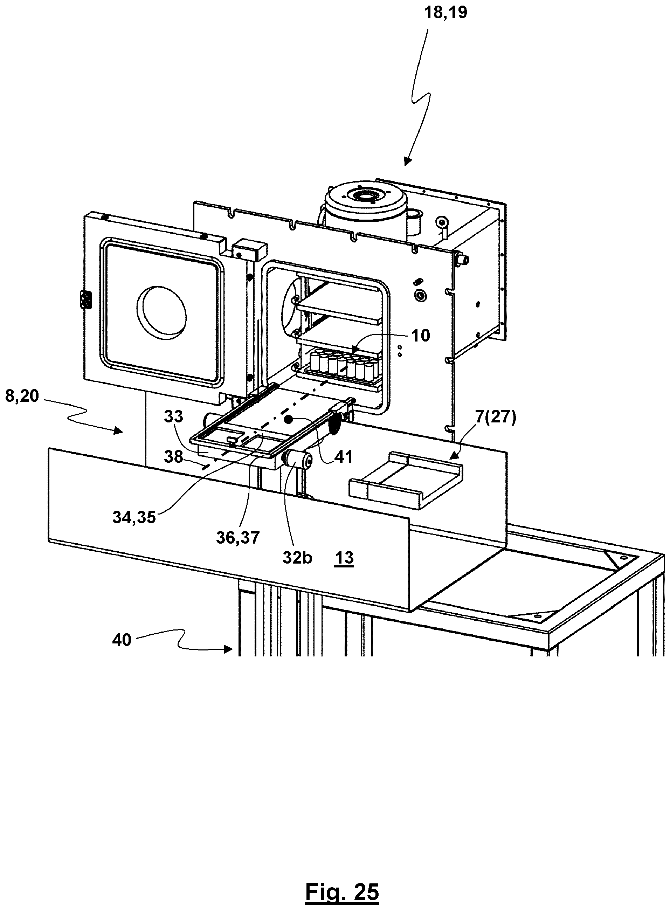

In dem nächsten Verfahrensschritt 121 wird durch Betätigung des Handbetätigungsorgans 32a der Schlitten 33 von der Stirnseite der Stellfläche 24a weg bewegt und aus dem Innenraum 23 des Gefriertrockners 18 heraus bewegt (**Fig. 25**).

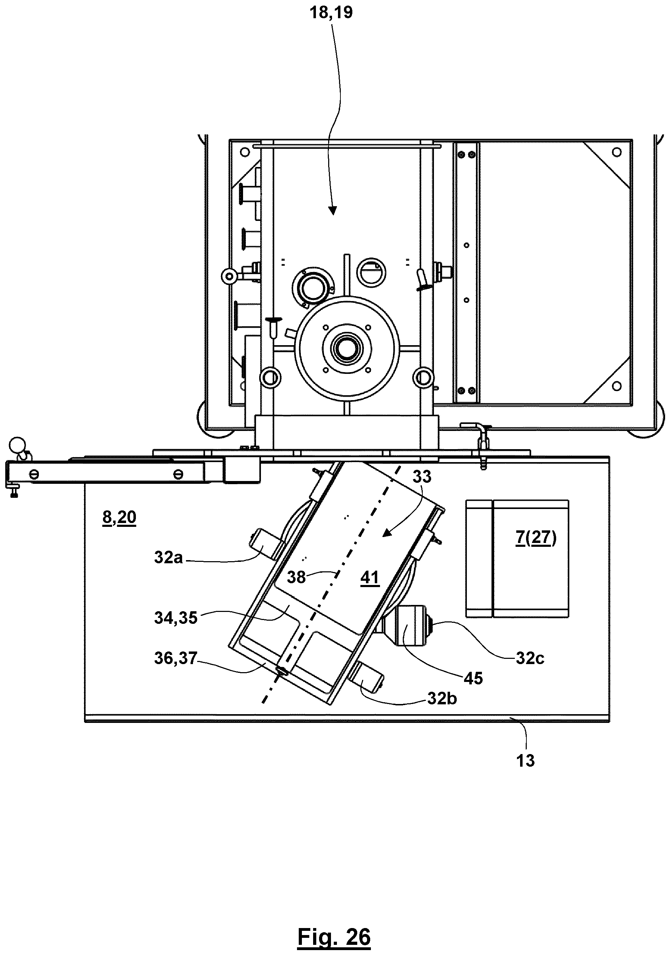

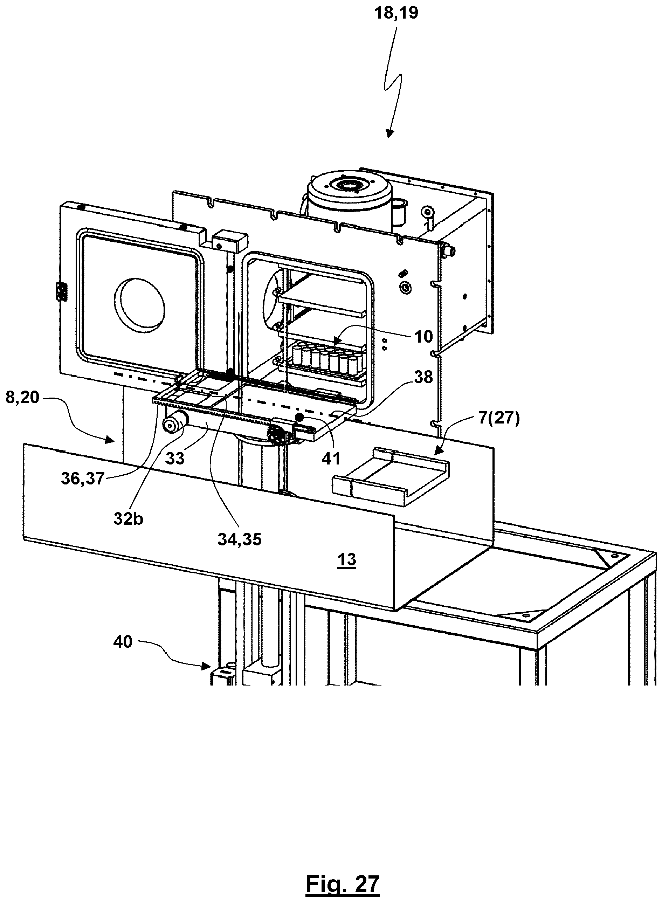

Im nächsten Verfahrensschritt 122 kann dann eine Verschwenkung des Schlittens 33 um die Hochachse 39 derart erfolgen, dass sich die Längsachse 38 von der Ausrichtung parallel zur Be- und Entladerichtung 22, 25 verändert in die Ausrichtung entsprechend der Zuförderrichtung 9 und Abförderrichtung 26 (vgl. **Fig. 26****,** **27**).

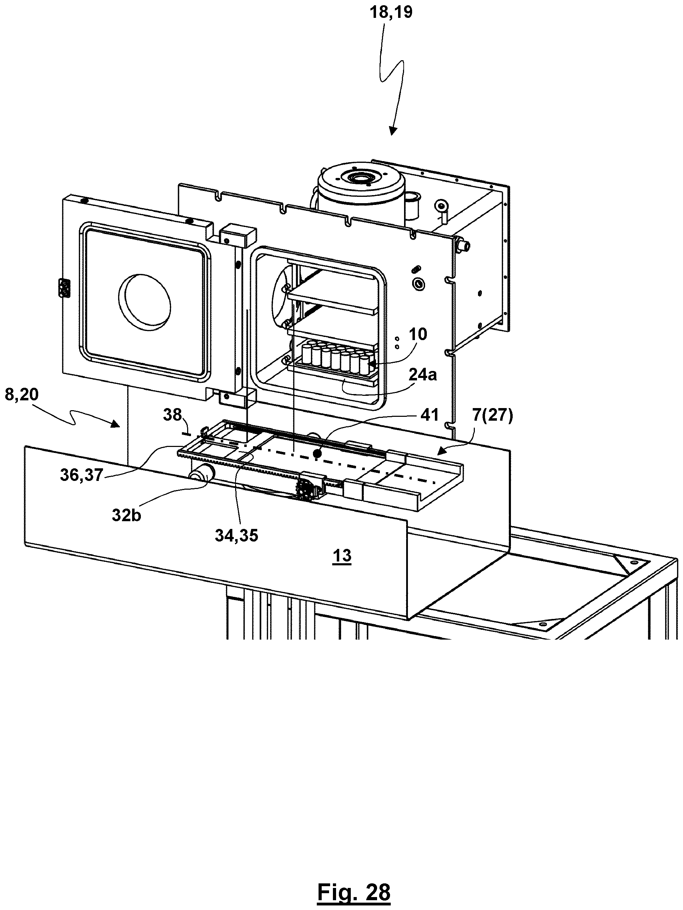

In einem Verfahrensschritt 123 kann der Bediener 14 die Handbetätigungsorgane 32c, 32d betätigen, womit die Hubeinrichtung 40 die nächste gespeicherte Hubstellung herbeiführt, in welcher die Standfläche 41 wieder bündig zu der Zufördereinrichtung 7 angeordnet ist. Gegebenenfalls kann auch durch Betätigung des Handbetätigungsorgans 32a eine etwaige Lücke zwischen dem Schlitten 33 und der Zufördereinrichtung 9 geschlossen werden (**Fig. 28**).

Im Folgenden können dann die zuvor erläuterten Verfahrensschritte wiederholt werden, um den Gefriertrockner 18 mit weiteren Stellflächen-Trocknungsproduktgruppen 10 zu befüllen. Da die weiteren Stellflächen-Trocknungsproduktgruppen 10 dann anderen Stellflächen 24b, 24c zugeführt werden müssen, steuert dann die Hubeinrichtung 40 den jeweiligen Stellflächen 24b, 24c zugeordnete Hubstellungen an, die zuvor angelernt oder gespeichert worden sind.

Nach vollständigem Beladen des Gefriertrockners 18 kann die Tür 21 geschlossen werden und der Gefriertrocknungsprozess durchgeführt werden.

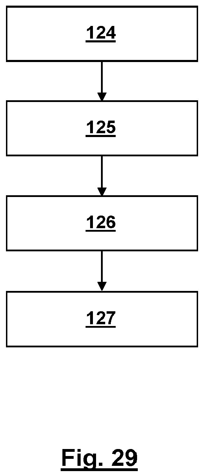

**Fig. 29** zeigt ein Verfahren zur Umrüstung der Be- und Entladereinrichtung 31 von einer Beladekonfiguration (s. Fig. 14) in eine Entladekonfiguration (s. Fig. 15), wobei für die umgekehrte Umrüstung das Entsprechende in umgekehrter Reihenfolge gilt.

Befindet sich die Be- und Entladeeinrichtung 31 in der Beladekonfiguration, wird in einem Verfahrensschritt 124 (ggf. nach Überführung des Schlittens 33 in eine geeignete Hubstellung und/oder Herbeiführung einer geeigneten Ausrichtung der Längsachse 38) das Entladeteil 36 mit dem daran montierten Beladeteil 34 aus der Führung 67 und damit von dem Schlitten 33 entfernt.

In einem Verfahrensschritt 125 erfolgt die Demontage des Beladeteils 34 von dem Entladeteil 36.

In einem Verfahrensschritt 126 wird dann die Orientierung des Entladeteils 36 um 180° gegenüber der Hochachse 39 verändert.

Schließlich wird in einem Verfahrensschritt 127 das Entladeteil 36 ohne das Beladeteil 34 mit dem Schlitten 33 montiert, indem die Seitenschenkel 86, 87 des Entladeteils 36 in die Führungskanäle 69 der Führungen 67 eingeführt werden und ein Eingriff der Antriebsräder 68 in die Zahnstange 89, 90 hergestellt wird. In der so herbeigeführten Entladekonfiguration kann dann das Verfahren zum Entladen des Gefriertrockners 18 durchgeführt werden.

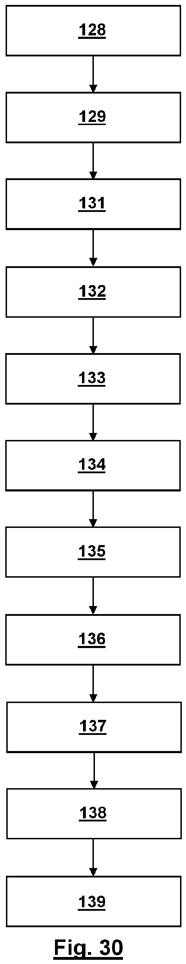

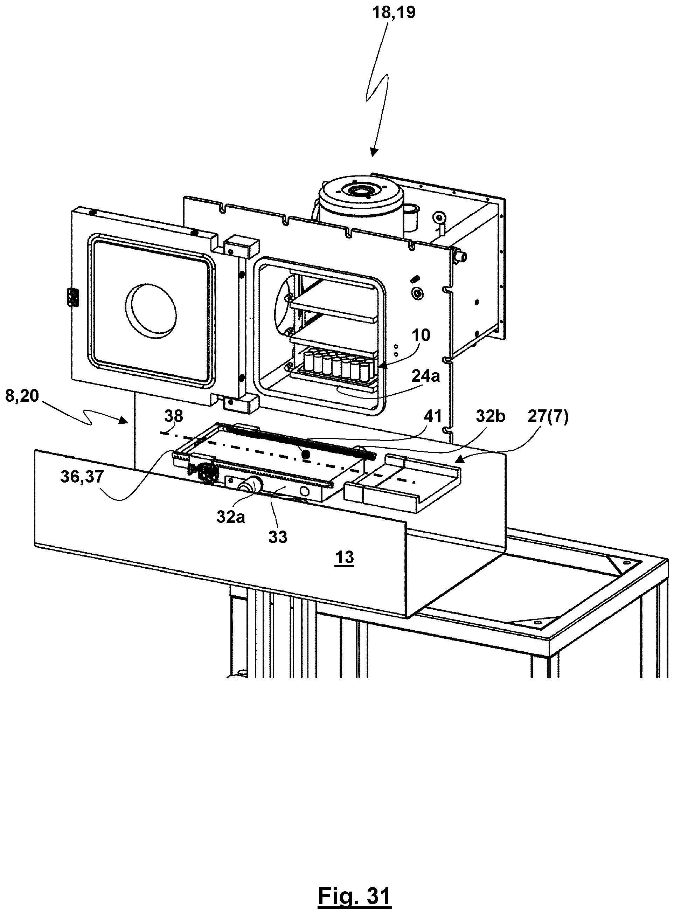

**Fig. 30** zeigt schematisch das Verfahren zum Entladen des Gefriertrockners, wobei auf die Fig. 31 bis 41 Bezug genommen wird.

In einem Verfahrensschritt 128 ist der Gefriertrocknungsprozess abgeschlossen und es hat ein Wechsel von der Beladekonfiguration zu der Entladekonfiguration gemäß dem in Fig. 29 dargestellten Verfahren stattgefunden. Die Be- und Entladeeinrichtung 31 befindet sich in der in **Fig. 31** dargestellten Ausgangsstellung.

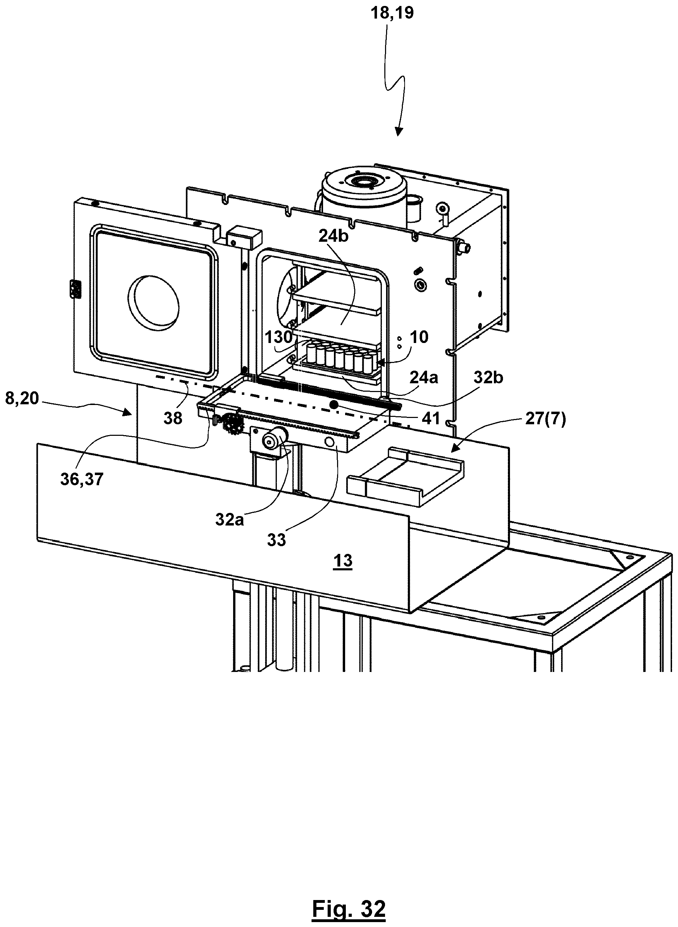

In einem Verfahrensschritt 129 erfolgt eine Betätigung der Handbetätigungsorgane 32c, 32d, die zur Aktivierung der Hubeinrichtung 40 führt. Die Hubeinrichtung 40 führt automatisch eine angelernte oder gespeicherte Hubstellung herbei. Die Hubstellung ist dabei derart, dass sich das Entladeteil 36 in der Höhe eines Zwischenraums 130 zwischen den Trocknungsprodukten 6 der Stellflächen-Trocknungsproduktgruppe 10 auf der zu entladenden Stellfläche 24a und der Unterseite der darüber angeordneten Stellfläche 24b befindet (**Fig. 32**).

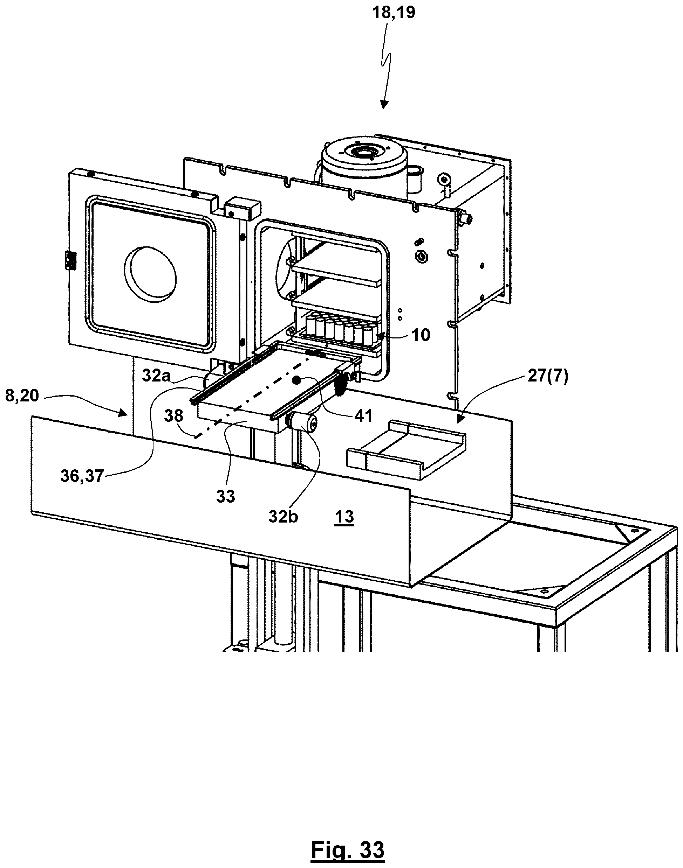

In einem Verfahrensschritt 131 wird der Schlitten 33 mit dem daran montierten Entladeteil um die Hochachse 39 so gedreht, dass die Längsachse 38 von einer Ausrichtung entsprechend der Zuförderrichtung 9 und Abförderrichtung 26 in die Beladerichtung 22 und Entladerichtung 25 verdreht wird (**Fig. 33**). Hierbei erstrecken sich die Seitenschenkel 86, 87 von dem Grundschenkel 85 von dem Gefriertrockner 18 weg.

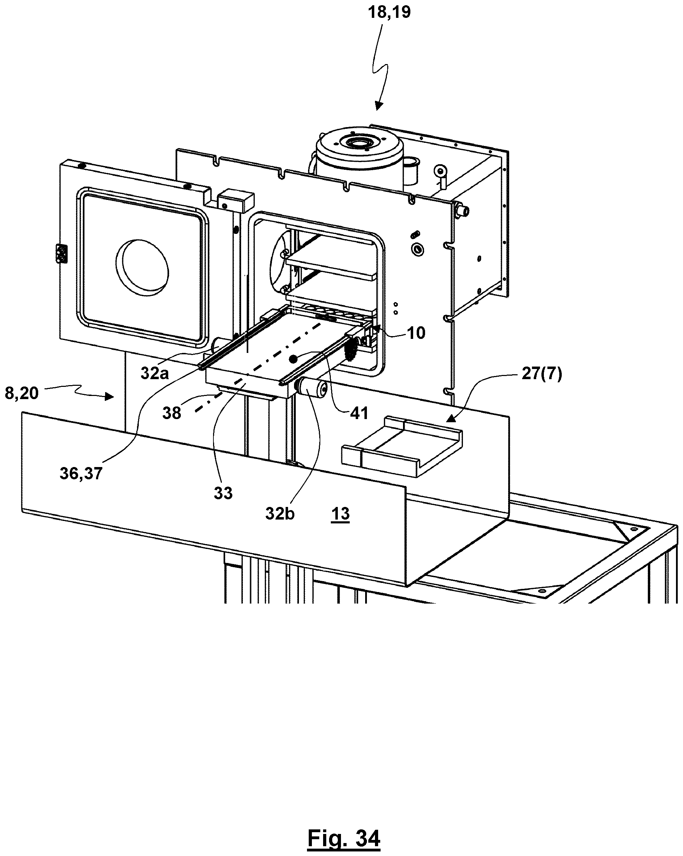

In einem Verfahrensschritt 132 wird durch Betätigung des Handbetätigungsorgans 32a der Schlitten 33 so in Beladerichtung 22 bewegt, dass die Stirnseite des Grundkörpers 64 des Schlittens 33 in den Innenraum 23 des Gefriertrockners 18 eintritt, ohne mit den Trocknungsprodukten 6 zu kollidieren (**Fig. 34**).

(Auch während des Entladens kann für das Bewegen des Entladeteils 36 einerseits und die Verschwenkung des Schlittens 33 um die Hochachse eine unterschiedliche Hubstellung gewählt werden.)

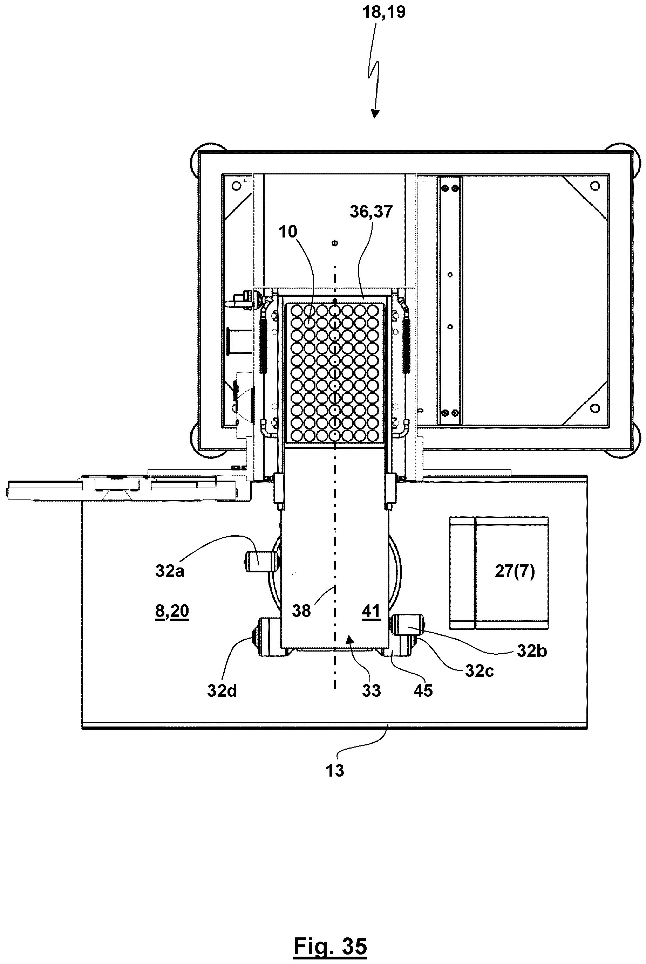

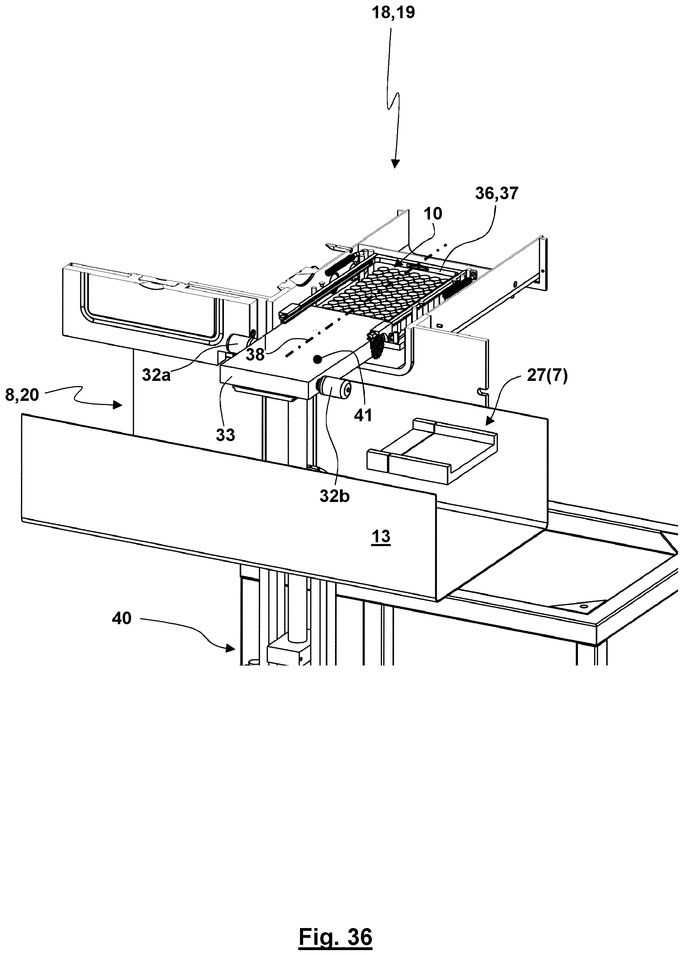

Im nächsten Verfahrensschritt 133 wird dann über die Betätigung des Handbetätigungsorgans 32b das Entladeteil 36 in Beladerichtung 22 bewegt. Hierbei passiert der Grundschenkel 85 des Entladeteils 36 den Zwischenraum 130, ohne in Kontakt mit den Trocknungsprodukten 6 und der darüber angeordneten Stellfläche 24b zu kommen. Diese Bewegung des Entladeteils 36 in Beladerichtung 22 erfolgt soweit, bis der Grundschenkel 85 des Entladeteils 36 in der Draufsicht hinter der letzten Reihe der Trocknungsprodukte 6 der Stellflächen-Trocknungsproduktgruppe 10 angeordnet ist (**Fig. 35****,** **36**).

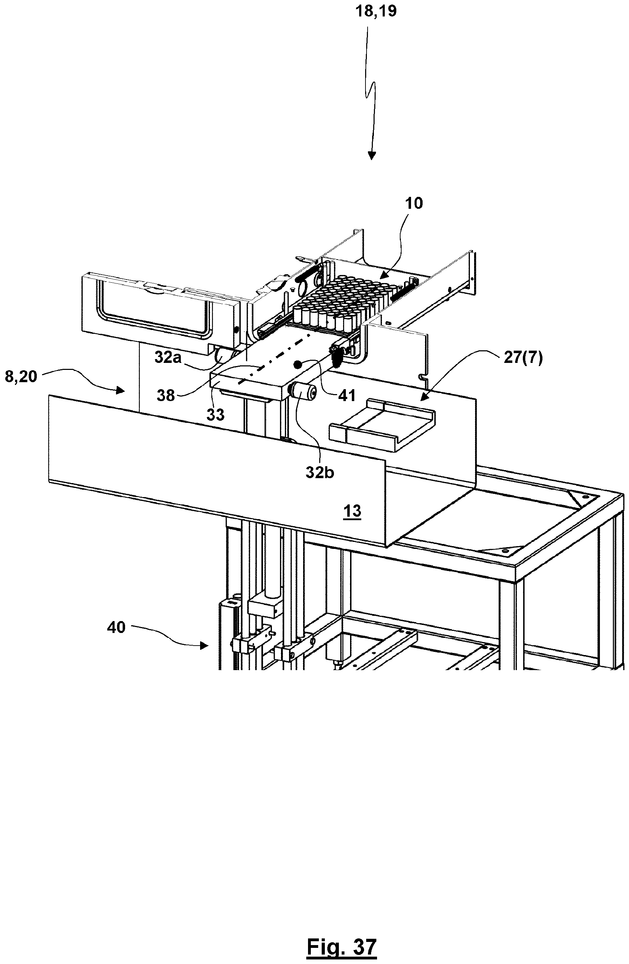

Dann betätigt der Bediener 14 in einem Verfahrensschritt 134 die Handbetätigungsorgane 32c, 32d, wodurch die Hubeinrichtung 40 aktiviert wird. Die Hubeinrichtung 40 führt eine (angelernte oder gespeicherte) Hubstellung herbei, indem der Grundschenkel 85 des Entladeteils 36 von der Höhe des Zwischenraums 130 abgesenkt wird in eine Höhe, in der sich die Trocknungsprodukte 6 befinden (**Fig. 37**).

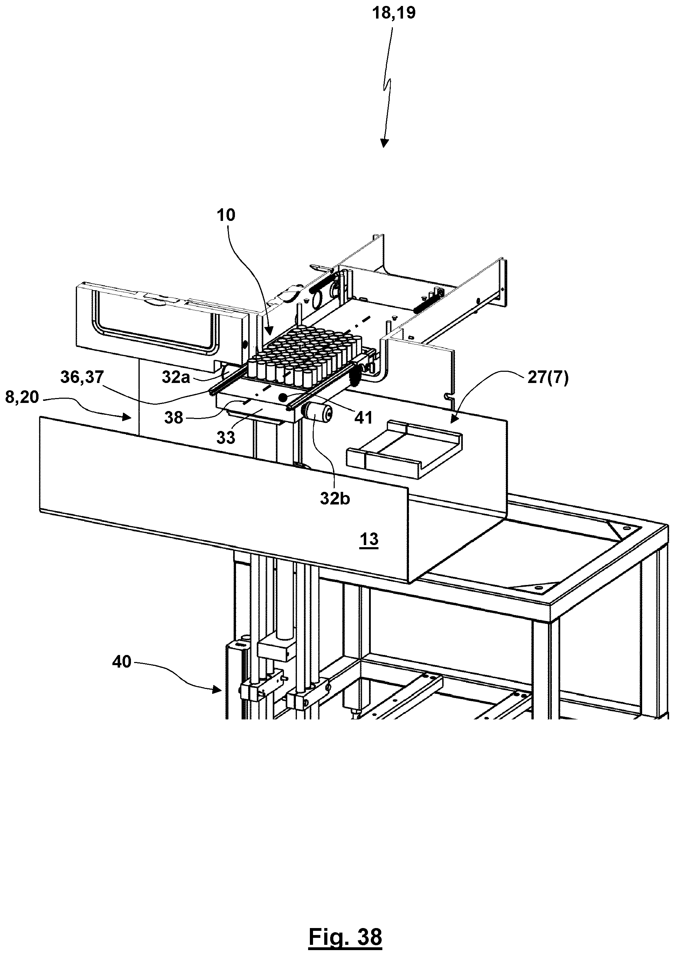

In einem Verfahrensschritt 135 betätigt dann der Bediener 14 das Handbetätigungsorgan 32b derart, dass das Entladeteil 36 in Entladerichtung 25 bewegt wird. Mit dieser Bewegung kommt die Schiebefläche 97 zur Anlage an die hinterste Reihe der Trocknungsprodukte 6 der Stellflächen-Trocknungsproduktgruppe 10 und die Schiebefläche 97 schiebt die Stellflächen-Trocknungsproduktgruppe 10 von der Stellfläche 24a auf die Standfläche 41 des Schlittens 33 (**Fig. 38**).

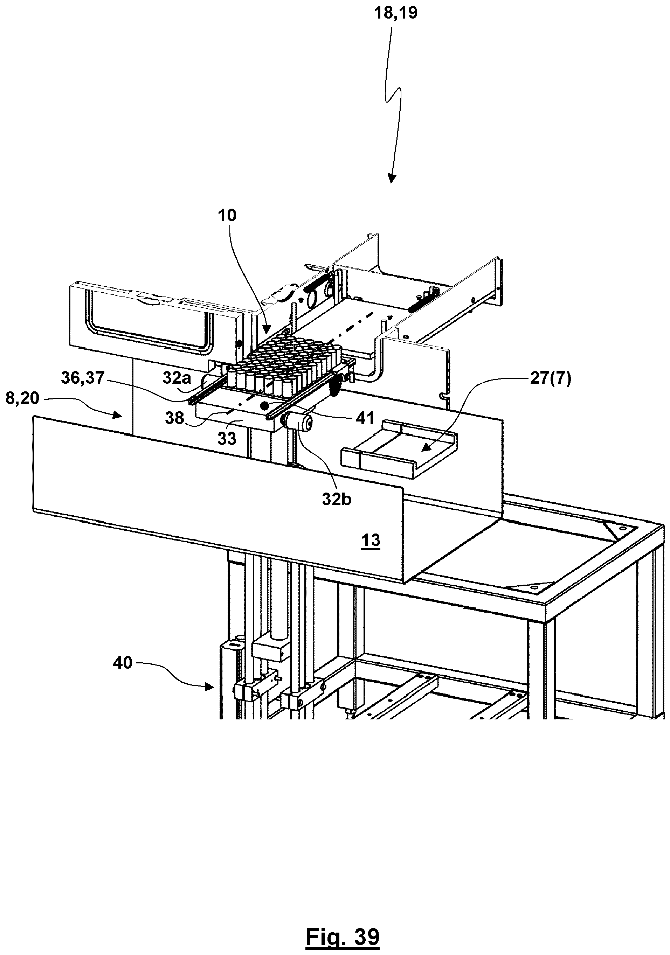

Im folgenden Verfahrensschritt 136 kann der Bediener 14 dann das Handbetätigungsorgan 32a betätigen, womit der Schlitten 33 aus dem Innenraum 23 des Gefriertrockners 18 entfernt wird (**Fig. 39**).

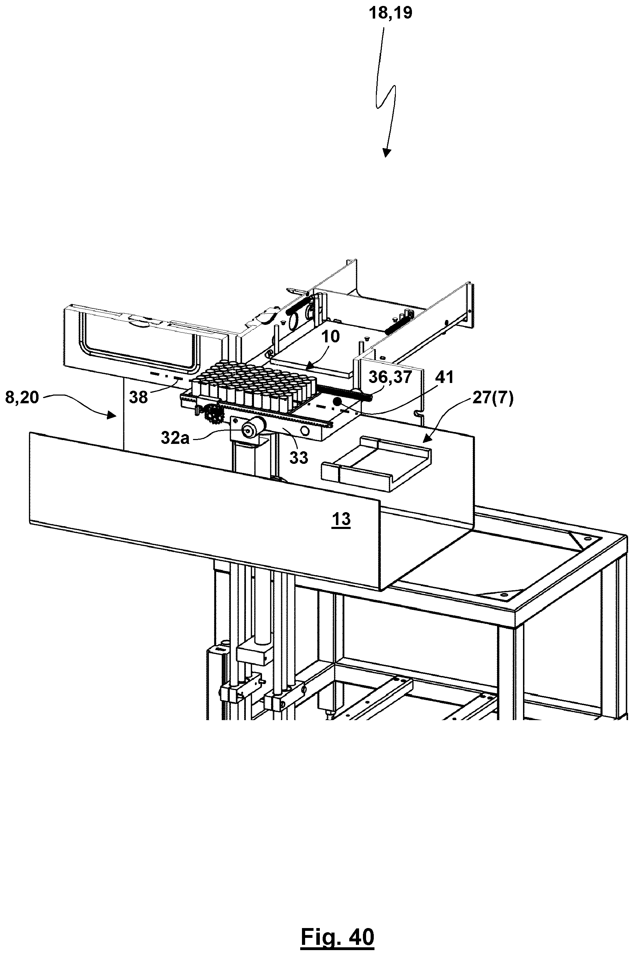

In einem Verfahrensschritt 137 erfolgt dann die manuelle Verschwenkung des Schlittens 33 um die Hochachse 39 derart, dass die Längsachse 38 des Schlittens verschwenkt wird von einer Ausrichtung entsprechend der Beladerichtung 22 und Entladerichtung 25 in die Ausrichtung entsprechend der Zuförderrichtung 9 und Abförderrichtung 26 (**Fig. 40**).

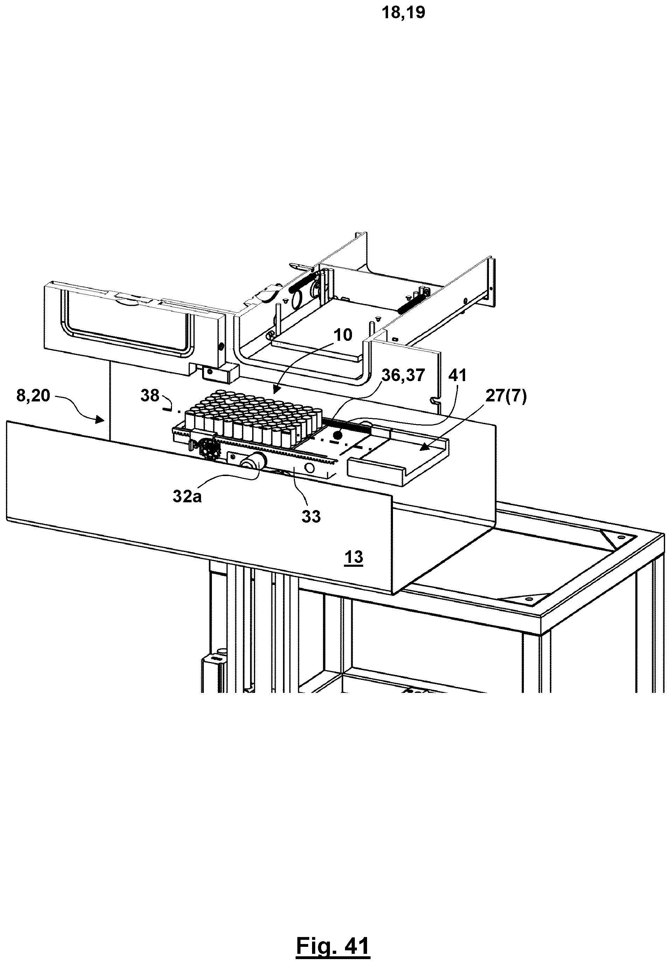

In einem Verfahrensschritt 138 erfolgt die nochmalige Betätigung der Handbetätigungsorgane 32c, 32d durch den Bediener 14. Hiermit wird ausgelöst, dass die Hubeinrichtung 40 den Schlitten 33 mit dem Entladeteil 36 und der Stellflächen-Trocknungsproduktgruppe 10 abgesenkt wird in eine (gespeicherte oder angelernte) Hubstellung, in der die Standfläche 41 des Schlittens 33 bündig zu der Abfördereinrichtung 27 angeordnet ist (**Fig. 41**). Eine etwaige Lücke zwischen der Stirnseite des Grundkörpers 64 des Schlittens 33 und der Stirnseite der Abfördereinrichtung 27 kann ggf. durch Betätigung des Handbetätigungsorgans 32a geschlossen werden.

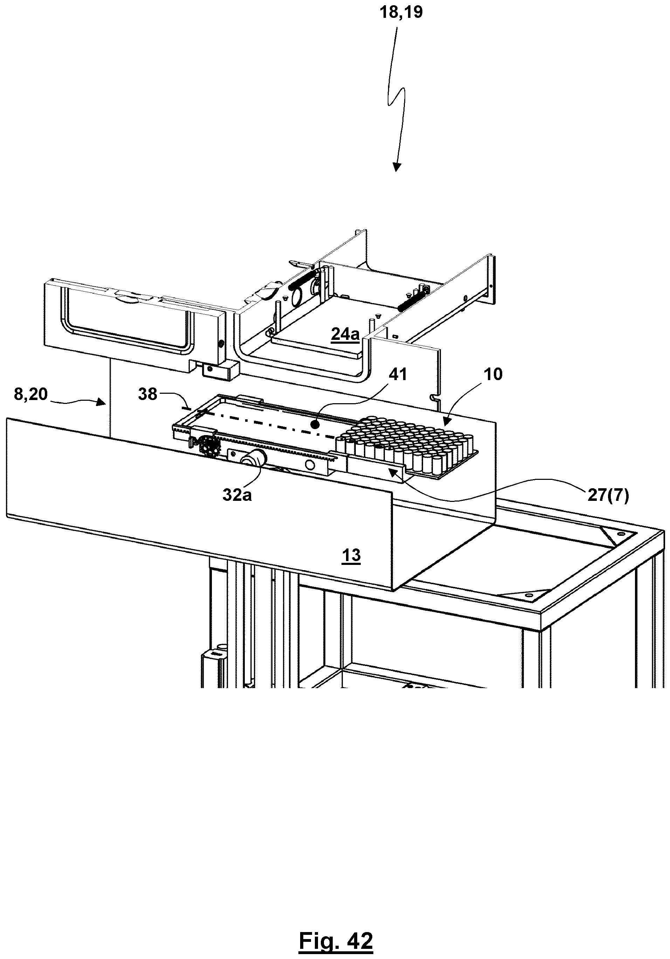

In einem Verfahrensschritt 139 betätigt der Bediener 14 dann das Handbetätigungsorgan 32b, so dass sich das Entladeteil 36 in Entladerichtung 26 bewegt und die Schiebefläche 97 des Entladeteils 36 die Stellflächen-Trocknungsproduktgruppe 10 von der Standfläche 41 des Schlittens 33 auf die Abfördereinrichtung 27 schiebt (**Fig. 42**).

Im Rahmen der Erfindung können die mit den Bezugszeichen gekennzeichneten Bauelemente, beispielsweise das Beladeteil 34 und Entladeteil 36, ein- oder mehrteilig ausgebildet sein.

Im Rahmen der Erfindung kann der Beladevorgang durchgeführt werden, ohne dass der Bediener 14 seine Hände aus dem Handschuh 15 entfernen muss (wobei dies auch durchaus möglich ist). Sämtliche Bedienungen der Handbetätigungsorgane 32 und damit die gesamte Handhabung der Stellflächen-Trocknungsproduktgruppe 10, des Schlittens 33, des Beladeteils 34 und des Entladeteils 36, erfolgt im Innenraum 11 des Containments 8. Hierbei unterstützen die Antriebsverbindungen und die Führungen entlang der genannten Freiheitsgrade die sorgfältige Ausführung des Beladevorgangs. Das Entsprechende gilt für den Entladevorgang.

Als eine Besonderheit der Erfindung ist der Abstand 11 der Führungsflächen 109, 110 des Beladeteils 34 kleiner als der Abstand 108 der Führungsflächen 106, 107 des Entladeteils 36. Dies kann vorteilhaft genutzt werden, wenn möglich ist, dass die Trocknungsprodukte 6 der Stellflächen-Trocknungsproduktgruppe 10, die zu entladen sind, nach dem Beladen und der Durchführung des Gefriertrocknungsprozesses mit größeren (insbesondere lateralen) Abständen voneinander angeordnet sein können, was zu Problemen führen kann, wenn ein Absenken des Entladerahmens 36 in dem Verfahrensschritt 134 erfolgt, da dann die Seitenschenkel 86, 87 mit den lateral außen angeordneten Trocknungsprodukten 6 kollidieren könnten.

Sind unterschiedliche Abstände 108, 111 nicht gewünscht, ist auch möglich, dass das Beladeteil 43 lediglich als Einlegebalken ausgebildet ist, dessen Geometrie dem Grundschenkel 98 entspricht, ggf. auch mit dem Steg 101 und dem Befestigungselement 102, während dann die Seitenschenkel 99, 100 nicht an dem Beladeteil 34 vorhanden sein müssen.

Die Kräfte für die Bewegung der Förderorgane 112 können mittels eines (beispielsweise elektrischen) Antriebs herbeigeführt werden, wobei aber das Auslösen und/oder Beenden der Erzeugung der Kräfte durch den Antrieb manuell durch den Bediener über ein Handbetätigungsorgan 32 erfolgt. Möglich ist auch, dass der Bediener selbst die Kräfte für die Bewegung der Förderorgane mit seinen Händen erzeugt. Für das erläuterte Ausführungsbeispiel erfolgt die Erzeugung der Bewegung des Förderorgan 112d mittels eines Antriebs, während die Bewegung der Förderorgan 112a, 112b, 112c manuell durch den Bediener verursacht wird. Für eine abgewandelte Ausführungsform ist aber durchaus möglich, dass auch die Bewegung der Förderorgane 112a, 112b, 112c bei manueller Auslösung und/oder Beendigung mittels eines Antriebs hervorgerufen wird oder die Bewegung des Förderorgan 112d manuell durch den Benutzer verursacht wird. Eine Steuerung einzelner Verfahrensabschnitte sowie die Einleitung der Bewegung der Förderorgane erfolgt durch den Bediener. Hingegen kann eine Beendigung eine Bewegung eines Förderorgans durch einen gespeicherten oder angelernten Hub oder durch das Erreichen eines Anschlags erfolgen.

Zusätzlich einer Steuerung über Handbetätigungsorgane, die sich in dem Pilotgefriertrockner-Containment befinden, kann auch eine Steuerung über außerhalb des Gefriertrockner-Containments angeordnete Handbetätigungsorgane oder Fußbetätigungsorgane erfolgen.

Für die hier dargestellten und beschriebenen Ausführungsformen erfolgt die Verdrehung des Schlittens 33 von der Ausrichtung entsprechend der Zuförderrichtung 9 in die Beladerichtung 22 und von der Entladerichtung 25 in die Abförderrichtung 26 jeweils um 90° um die Hochachse. Je nach räumlicher Ausgestaltung der Gefriertrocknungsanlage 1 sind aber auch beliebige andere Drehwinkel möglich.

Möglich ist auch, dass (insbesondere für so genannte "plain level Anwendungen") das Be- und/oder Entladen ohne jedwedes Heben und/oder Senken des Schlittens 33 erfolgt.

Möglich ist, dass anstelle des in Fig. 12 dargestellten Beladeteils 34 zwei Anbauteile 145a, 145b verwendet werden, die in grober Näherung den Grundschenkeln 99, 100 entsprechen und jeweils eine Führungsfläche 109, 110 ausbilden. Die Anbauteile 145a, 145b sind dann jeweils an einem zugeordneten Seitenschenkel 86, 87 des Entladeteils 36 montiert. In diesem Fall können der Grundschenkel 99 und der Steg 101 entfallen und es ist keine Schiebefläche 141 vorhanden, so dass auch beim Beladen das Schieben der Trocknungsprodukte 6 durch die Schiebefläche 97 des Entladeteils 36 erfolgt. Allerdings gewährleisten dann die Anbauteile 145a, 145b eine Verringerung des Abstandes 108 der Seitenschenkel 86, 87 des Entladeteils 36 zu dem Abstand 111 der Anbauteile 145a, 145b.

Ebenfalls möglich ist, dass ein Anbauteil lediglich den Schenkel 98 (gegebenenfalls auch mit einem Steg 101 und einem Befestigungselement 102) aufweist, sodass in diesem Fall von dem Anbauteil lediglich die Schiebefläche 141 bereitgestellt wird, während keine seitlichen Führungsflächen 109, 110 bereitgestellt werden, sodass auch bei dem Beladen eine seitliche Führung durch die seitlichen Führungsflächen 106, 107 des Entladeteils 36 erfolgt.

Möglich ist, dass die Paare der Führungsflächen 106, 107 bzw. 109, 110 in einer Draufsicht parallel zueinander orientiert sind. Durchaus möglich ist allerdings auch, dass mindestens ein Paar der Führungsflächen in der Draufsicht einen Öffnungswinkel aufweist, der beispielsweise im Bereich von 0,5° bis 10° oder 0,7° bis 5° oder 1° bis 3° liegen kann. Sind beispielsweise die Führungsflächen 109, 110 in Beladerichtung mit einem Öffnungswinkel geöffnet, ist nach dem Einschieben der Trocknungsprodukte 6 in den Gefriertrockner die Bewegung des Beladeteils 34 oder Anbauteils 145 vereinfacht, da sich die Führungsflächen 109, 110 infolge des Öffnungswinkels leicht und sofort vollständig von den Trocknungsprodukten 6 lösen und unmittelbar nach dem Lösen keine Reibung mehr zwischen den Trocknungsprodukten 6 und den Führungsflächen 109, 110 entsteht, die zu einer unerwünschten Veränderung der Position der Trocknungsprodukte 6 führen könnte.

### BEZUGSZEICHENLISTE

- 1: Gefriertrocknungsanlage
- 2: Reinigungsstation
- 3: Trocknungsbehältnis
- 4: Befüllungsstation
- 5: Trocknungsgut
- 6: Trocknungsprodukt
- 7: Zufördereinrichtung
- 8: Containment
- 9: Zuförderrichtung
- 10: Stellflächen-Trocknungsproduktgruppe
- 11: Innenraum Containment
- 12: Schleuse
- 13: Wandung
- 14: Bediener
- 15: Handschuh
- 16: Seitenwandung
- 17: Seitenwandung
- 18: Gefriertrockner
- 19: Pilotgefriertrockner
- 20: Pilotgefriertrockner-Containment
- 21: Tür
- 22: Beladerichtung
- 23: Innenraum Gefriertrockner
- 24: Stellfläche
- 25: Entladerichtung
- 26: Abförderrichtung
- 27: Abfördereinrichtung
- 28: Bördelstation
- 29: Schleuse
- 30: Bodenwandung
- 31: Be- und Entladeeinrichtung
- 32: Handbetätigungsorgan
- 33: Schlitten
- 34: Beladeteil
- 35: Beladerahmen
- 36: Entladeteil
- 37: Entladerahmen
- 38: Längsachse
- 39: Hochachse
- 40: Hubeinrichtung
- 41: Standfläche
- 42: Bedieneinheit
- 43: Handbetätigungsschalter
- 44: Handbetätigungsschalter
- 45: Tragkörper
- 46: Hubstange
- 47: Flansch
- 48: Schlittenträger
- 49: Elektrischer Antrieb
- 50: Antriebsverbindung
- 51: Servomotor
- 52: Zahnrad
- 53: Spindel
- 54: Spindeltrieb
- 55: Spindelmutter
- 56: Führungsstange
- 57: Hubplatte
- 58: Sensor
- 59: Laserstrahl
- 60: Faltenbalg
- 61: Flansch
- 62: Flansch
- 63: Ablaufschräge
- 64: Grundkörper
- 65: Handbetätigungsrad
- 66: Handbetätigungsrad
- 67: Führung
- 68: Antriebsrad
- 69: Führungskanal
- 70: Flügelmutter
- 71: Antriebsverbindung
- 72: Antriebsverbindung
- 73: Antriebswelle
- 74: Antriebszahnrad
- 75: Zahnstange
- 76: Antriebswelle
- 77: Kegelrad
- 78: Kegelrad
- 79: Zwischenwelle
- 80: Kegelrad
- 81: Kegelrad
- 82: Achswelle
- 83: Abstand
- 84: Lager
- 85: Grundschenkel
- 86: Seitenschenkel
- 87: Seitenschenkel
- 88: Aufnahme
- 89: Zahnstange
- 90: Zahnstange
- 91: Aufnahme
- 92: Aufnahme
- 93: Nut
- 94: Nut
- 95: Langloch
- 96: Gewindebohrung
- 97: Schiebefläche
- 98: Grundschenkel
- 99: Seitenschenkel
- 100: Seitenschenkel
- 101: Steg
- 102: Befestigungselement
- 103: Flügelschraube
- 104: Fortsatz
- 105: Fortsatz
- 106: Führungsfläche
- 107: Führungsfläche
- 108: Abstand
- 109: Führungsfläche
- 110: Führungsfläche
- 111: Abstand
- 112: Förderorgan
- 113: Führung
- 114: Verfahrensschritt
- 115: Verfahrensschritt
- 116: Verfahrensschritt
- 117: Verfahrensschritt
- 118: Verfahrensschritt
- 119: Verfahrensschritt
- 120: Verfahrensschritt
- 121: Verfahrensschritt
- 122: Verfahrensschritt
- 123: Verfahrensschritt
- 124: Verfahrensschritt
- 125: Verfahrensschritt
- 126: Verfahrensschritt
- 127: Verfahrensschritt
- 128: Verfahrensschritt
- 129: Verfahrensschritt
- 130: Zwischenraum
- 131: Verfahrensschritt
- 132: Verfahrensschritt
- 133: Verfahrensschritt
- 134: Verfahrensschritt
- 135: Verfahrensschritt
- 136: Verfahrensschritt
- 137: Verfahrensschritt
- 138: Verfahrensschritt
- 139: Verfahrensschritt
- 140: Ausnehmung
- 141: Schiebefläche
- 142: Drehlager
- 143: Drehlagerscheibe
- 144: Drehlagerscheibe
- 145: Anbauteil

## Patentansprüche

1. Pilotgefriertrockner-Containment (20) für das manuell gesteuerte Be- und/oder Entladen eines Pilotgefriertrockners (19) mit
a) einer Wandung (13),
b) einem durch die Wandung (13) begrenzten Innenraum (11) und
c) mindestens einem Handschuh (15),
ca) der an der Wandung (13) gehalten ist und
cb) dessen Handschuhinnenraum von außen für eine Hand zugänglich ist und gegenüber dem Innenraum (11) des Pilotgefriertrockner-Containments (20) abgedichtet ist,
**dadurch gekennzeichnet, dass**
in dem Innenraum (11) des Pilotgefriertrockner-Containments (20) ein Handbetätigungsorgan (32) angeordnet ist, welches bei Betätigung durch eine in dem Handschuhinnenraum angeordnete Hand eine Bewegung eines Förderorgans (112) herbeiführt, wobei die Bewegung des Förderorgans (112) durch eine Führung (113) entlang eines durch die Führung (113) vorgegebenen Freiheitsgrades geführt ist.

2. Pilotgefriertrockner-Containment (20) nach Anspruch 1, **dadurch gekennzeichnet, dass** ein Anschlag oder eine Rastierung oder eine Verriegelung vorhanden ist, der oder die die Bewegung des Förderorgans (112) entlang des Freiheitsgrades einseitig oder beidseitig begrenzt.

3. Pilotgefriertrockner-Containment (20) nach Anspruch 1 oder 2, **dadurch gekennzeichnet, dass** das Handbetätigungsorgan (32) ein Handbetätigungsschalter (43; 44) ist, welcher einen Antrieb (49) aktiviert und/oder deaktiviert, mittels dessen das Förderorgan (113d) bewegt wird.

4. Pilotgefriertrockner-Containment (20) nach Anspruch 3, **dadurch gekennzeichnet, dass** zwei Handschuhe (15) und zwei Handbetätigungsschalter (43, 44) vorhanden sind und die Handbetätigungsschalter (43, 44) den Antrieb (49) derart ansteuern, dass eine Aktivierung oder Deaktivierung des Antriebs (49) nur erfolgt, wenn mit zwei in den Handschuhen (15) angeordneten Händen beide Handbetätigungsschalter (43, 44) betätigt werden.

5. Pilotgefriertrockner-Containment (20) nach einem der vorhergehenden Ansprüche, **dadurch gekennzeichnet, dass** mindestens ein Handbetätigungsorgan (32) einen elektrischen Antrieb (49) betätigt, welcher das Förderorgan (113d), insbesondere in Richtung einer Hochachse (39) in unterschiedliche Hubstellungen, bewegt.

6. Pilotgefriertrockner-Containment (20) nach Anspruch 5, **dadurch gekennzeichnet, dass** der elektrische Antrieb (49) das Förderorgan (113d) in vorbestimmte Hubstellungen bewegt, welche mit der Höhe mindestens einer Stellflächen (24) des Pilotgefriertrockners (19) und/oder der Höhe einer Zufördereinrichtung (7) oder Abfördereinrichtung (27) korrelieren.

7. Pilotgefriertrockner-Containment (20) nach Anspruch 5 oder 6, **dadurch gekennzeichnet, dass** eine Herbeiführung einer Bewegung eines Förderorgans (112) entlang eines durch eine erste Führung (112) vorgegebenen Freiheitsgrades nur möglich ist, wenn das oder ein Förderorgan (112) entlang einer durch eine zweite Führung (112) vorgegebenen Freiheitsgrades einer vorbestimmte Stellung erreicht hat.

8. Pilotgefriertrockner-Containment (20) nach einem der vorhergehenden Ansprüche, **dadurch gekennzeichnet, dass** das Handbetätigungsorgan (32) ein Handbetätigungsschieber, ein Handbetätigungshebel oder ein Handbetätigungsrad (65; 66) ist, welcher oder welches über eine Antriebsverbindung (72) mit dem Förderorgan (113a; 113b) gekoppelt ist.

9. Pilotgefriertrockner-Containment (20) nach Anspruch 8, **dadurch gekennzeichnet, dass** das die Antriebsverbindung (71, 72) ein Getriebe aufweist.

10. Pilotgefriertrockner-Containment (20) nach einem der vorhergehenden Ansprüche, **dadurch gekennzeichnet, dass** das Förderorgan (113) ein Kopplungselement aufweist, über welches das Förderorgan (113) mit einem während des Gefriertrocknungsprozesses in der Trocknungskammer des Gefriertrockners angeordneten Förderorgan koppelbar ist.

11. Pilotgefriertrockner-Containment (20) nach Anspruch 8 oder 9, **dadurch gekennzeichnet, dass**
a) das Förderorgan (112a; 112b) ein Beladeteil (34) und/oder Entladeteil (36) aufweist, welches mit einer Schiebefläche (97, 141) zur Anlage an die Trocknungsprodukte (6) kommt und diese unter Überwindung der Reibung der Trocknungsprodukte mit einer Standfläche (41), auf der die Trocknungsprodukte (6) stehen, über die Standfläche (41) schiebt, und
b) ein Handbetätigungsrad (66) über eine Antriebsverbindung (72) mit dem Beladeteil (34) und/oder Entladeteil (36) derart verbunden ist, dass eine manuelle Betätigung des Handbetätigungsrads (66) dazu führt, dass das Beladeteil (34) oder Entladeteil (36) die Trocknungsprodukte (6) über die Standfläche (41) schiebt.

12. Pilotgefriertrockner-Containment (20) nach Anspruch 11, **dadurch gekennzeichnet, dass** die Antriebsverbindung (72) ein Antriebsrad (68) aufweist, welches mit einer Zahnstange (89, 90) des Beladeteils (34) oder Entladeteils (36) kämmt, und das Handbetätigungsrad (66) und das Antriebsrad (68) mit einem Abstand (83) in eine Be- oder Entladerichtung (22, 25) versetzt zueinander angeordnet sind.

13. Pilotgefriertrockner-Containment (20) nach einem der vorhergehenden Ansprüche, **dadurch gekennzeichnet, dass**
a) das Förderorgan (112c) einen Schlitten (33) aufweist, der ein oder das Beladeteil (34) und/oder Entladeteil (36) trägt, welches mit der Schiebefläche (97, 141) zur Anlage an die Trocknungsprodukte (6) kommt und diese unter Überwindung der Reibung der Trocknungsprodukte (6) mit der Standfläche (41), auf der die Trocknungsprodukte (6) stehen, über die Standfläche (41) schiebt, und
b) ein Handbetätigungsrad (65) über eine Antriebsverbindung (71) mit dem Schlitten (33) derart verbunden ist, dass eine manuelle Betätigung des Handbetätigungsrads (65) dazu führt, dass der Schlitten (33) mit dem Beladeteil (34) und/oder Entladeteil (36) in eine Be- oder Entladerichtung (22, 25) bewegt wird.

14. Pilotgefriertrockner-Containment (20) nach einem der vorhergehenden Ansprüche, **dadurch gekennzeichnet, dass** das oder ein Beladeteil (34) oder Entladeteil (36) in unterschiedlichen Ausrichtungen an den oder einen Schlitten (33) montierbar ist.

15. Verfahren zum Beladen eines Pilotgefriertrockners (19) mit einem Pilotgefriertrockner-Containment (20) nach einem der vorhergehenden Ansprüche mit den folgenden Verfahrensschritten:
a) Aufschieben einer Stellflächen-Trocknungsproduktgruppe (10) auf eine Standfläche (41) des Schlittens (33), wobei die Standfläche (41) durch das Beladeteil (34) begrenzt ist, sich der Schlitten (33) in Höhe der Zufördereinrichtung (7) befindet und der Schlitten (33) und eine Längsachse (38) des Beladeteils (34) in Zuförderrichtung (9) orientiert sind;
b) Anheben des Schlittens (33) und des Beladeteils (34) auf die Höhe einer zu beladenen Stellfläche (24) in Reaktion auf eine Betätigung eines Handbetätigungsorgans (32c, 32d);
c) Verändern der Ausrichtung des Längsachse (38) des Schlittens (33) und des Beladeteils (34) von der Ausrichtung in Zuförderrichtung (9) zu einer Ausrichtung in Beladerichtung (22);
d) Bewegung des Schlittens (33) in Beladerichtung (22) durch eine Betätigung eines Handbetätigungsorgans (32a);
e) Bewegung des Beladeteils (34) relativ zu dem Schlitten (33) in Beladerichtung (22) durch eine Betätigung eines Handbetätigungsorgans (32b), womit die Trocknungsprodukte (6) von dem Schlitten (33) auf eine Stellfläche (24) des Pilotgefriertrockners (19) geschoben werden.

16. Verfahren zum Entladen eines Pilotgefriertrockners (19) mit einem Pilotgefriertrockner-Containment (20) nach einem der vorhergehenden Ansprüche mit den folgenden Verfahrensschritten:
a) Anheben des Schlittens (33) und des Entladeteils (36) auf die Höhe eines Zwischenraums (130) zwischen den zu entladenden Trocknungsprodukten (6) und einer darüber angeordneten Stellfläche (24) in Reaktion auf eine Betätigung eines Handbetätigungsorgans (32c, 32d);
b) Bewegung des Entladeteils (36) in Beladerichtung (22) in Reaktion auf eine Betätigung eines Handbetätigungsorgan (32b), womit das Entladeteil (36) die Trocknungsprodukte (6) ohne Kontakt mit diesen durch den Zwischenraum (130) passiert;
c) Absenken des Schlittens (33) und des Entladeteils (36) derart, dass eine Schiebefläche (97) das Entladeteils (36) in Entladerichtung (25) vor den Trocknungsprodukten (6) angeordnet ist,
d) Bewegung des Entladeteils (36) in Reaktion auf eine Betätigung eines Handbetätigungsorgans (32b) in Entladerichtung (25), womit die Trocknungsprodukte (6) von der Stellfläche (24) auf eine Standfläche (41) des Schlittens (33) geschoben werden;
e) Bewegung des Schlittens (33) in Reaktion auf eine Betätigung eines Handbetätigungsorgans (32a) in Entladerichtung (25).

17. Verfahren zum Be- und Entladen eines Pilotgefriertrockners (19) mit einem Verfahren zum Beladen des Pilotgefriertrockners (19) nach Anspruch 15 und einem Verfahren zum Entladen des Pilotgefriertrockners (19) nach Anspruch 16, wobei insbesondere zwischen der Ausführung des Verfahrens zum Beladen und der Ausführung des Verfahrens zum Entladen eine Veränderung der Ausrichtung, in der das Beladeteil (34) und/oder Entladeteil (36) an dem Schlitten (33) montiert ist, von einer Beladeausrichtung in eine Entladeausrichtung erfolgt.
